# EUROPEAN PATENT SPECIFICATION

(11) **EP 2 573 699 B1**
(45) Date of publication and mention of the grant of the patent: **07.06.2017**
(21) Application number: 11783338.4
(22) Date of filing: 05.04.2011
(51) Int. Cl.: G06F 21/00, H04L 9/32, G06F 21/62

(54) **IDENTITY INFORMATION DE-IDENTIFICATION DEVICE**
VORRICHTUNG ZUR DE-IDENTIFIKATION VON IDENTITÄTSDATEN
DISPOSITIF DE DÉSIDENTIFICATION D'INFORMATIONS D'IDENTITÉ

(30) Priority: 19.05.2010 JP 2010114885
(43) Date of publication of application: 27.03.2013
(73) Proprietor: Hitachi, Ltd., Chiyoda-ku Tokyo 100-8280 (JP)
(72) Inventor: HARADA Kunihiko, Yokohama-shi Kanagawa 244-0817 (JP); TOGASHI Yumiko, Yokohama-shi Kanagawa 244-0817 (JP); SATO Yoshinori, Yokohama-shi Kanagawa 244-0817 (JP)
(74) Representative: Addiss, John William
(86) International application number: PCT/JP2011/058590
(87) International publication number: WO 2011/145401

(56) References cited:
- JP-A- 2002 092 367
- JP-A- 2007 172 404
- JP-A- 2008 217 425
- US-A1- 2008 222 319
- K. LEFEVRE; D. J. DEWITT; R. RAMAKRISHNAN: "Incognito: Efficient Full-Domain K-Anonymity", 2005 ACM SIGMOD INTERNATIONAL CONF. MANAGEMENT OF DATA, 2005, pages 49-60, XP002734215,

## Description

### Field of the invention

The present invention relates to anonymization of personal information.

### Background of the invention

These days when integration of an enormous quantity of data for individuals is being progressed, corporation that treats personal information is required to consider protection of the privacy. A business operator that treats personal information necessarily observes at least Act on the Protection of personal information (hereinafter, simply referred to as Protection Law) and applicable laws and regulations. The Protection Law obligates the management and administration for collecting and using the personal information and government ministries stipulate guidelines for concrete measures thereof.

One of the measurements for management stipulated by the guidelines is anonymization of personal information. For example, the Health, Labor, and Welfare Ministry requires the personal information be anonymized in a case of providing to a third party of personal information regarding medical care, conference presentation, report of medical accident unless particularly necessary. Further, The Ministry of Economy, Trade and Industry also has the anonymization of personal information as a desirable measurement at the time of providing the personal information to the third party.

The simplest anonymizing process of personal information includes removing information that is capable of identifying an individual from the personal information and obfuscating the information. An example of the former includes processing that removes a name and an address, and examples of the latter include processing that converts an address into the unit of prefectural and city governments and processing that converts an age into a unit of 10 years. Hereinafter, when an object to be obfuscated is represented by a tree structure in accordance with the level of obfuscation, it is referred to as a generalization hierarchy tree.

However, even though the anonymization processing is performed, in some cases, if a plurality of attributes regarding the individual is combined, the individual may be identified. For example, if the combination by the address of the unit of prefectural and city governments and the age of a unit of 10 years is a very rare case, the individual may be specified. Therefore, in anonymization, it is required to further definitively remove the identifiability.

As a technology for removing the identifiability, there is an anonymization technology that sets a threshold and generates anonymous data that guarantees that the threshold or more of combinations of arbitrary attribute values included in personal information data are included in the data. This invention belongs to this kind of anonymization technology. This kind of anonymization technology is disclosed in Non-Patent Document 1.

In K. LeFevre, D. J. DeWitt, and R. Ramakrishnan, "Incognito: Efficient Full-Domain K-Anonymity," 2005 ACM SIGMOD International Conf. Management of Data, pp. 49-60, 2005 (Non-Patent Document 1), it is disclosed that by obfuscating an attribute value in personal information data using a generalization hierarchy tree, it is guaranteed that at least a threshold number of the combinations of arbitrary attribute values occur in the disclosed data.

In US 2008/0222319 A1 describes an information output apparatus for appropriately protecting personal data while reducing cost.

### Summary of the Invention

The invention is defined in the independent claim 1.

The technology of Non-Patent Document 1 requires to separately define a generalization hierarchy tree that defines a level of obfuscation for every attribute. Further, since all of candidates which reach the threshold value or higher are output, anonymous data to be used needs to be selected. Therefore, it is difficult to automate a unit that determines a dominance of the availability between anonymous data.

The present invention has been made in an effort to appropriately protect personal information while lowering an operational cost of anonymization of personal information.

It is disclosed that a personal information anonymization device includes a personal information storing unit configured to store one or more personal information represented as a tuple of attribute values explaining each of the attributes of a person; a generalization hierarchy tree automatic generation unit configured to select one attribute and automatically configure a generalization hierarchy tree that represents a dominant concept of each attribute value which occurs in the personal information storage unit for each attribute as a tree structure in accordance with a level of obfuscation, using a frequency obtaining unit that acquires the number of input personal information having the attribute value for every attribute value that occurred in the selected attribute; and a recoding unit configured to recode the attribute values of the input personal information using the generalization hierarchy tree generated for the attribute corresponding to that attribute value, the generalization hierarchy trees being generated using the generalization hierarchy tree automatic generation unit. Therefore, the above-mentioned problems may be solved.

It is possible to reduce the operational cost accompanied by the automation and appropriately protect the personal information.

### Brief Description of Drawings

FIG. 1 is a view illustrating a configuration example of a computer in a first embodiment.
FIG. 2 is a view illustrating an example of a personal information table in the first embodiment.
FIG. 3 is a view illustrating an example of minimum identical value occurrence information in the first embodiment.
FIG. 4 is a view illustrating an example of attribute type information in the first embodiment.
FIG. 5(a) is a view illustrating an example of a generalization hierarchy tree table in the first embodiment.
FIG. 5(b) is a view illustrating an example of a generalization hierarchy tree table in the first embodiment.
FIG. 5(c) is a view illustrating an example of a generalization hierarchy tree table in the first embodiment.
FIG. 6 is a view illustrating an example of a generalization hierarchy tree table in the first embodiment.
FIG. 7 is a view illustrating an example of an anonymous information table in the first embodiment.
FIG. 8 is a view illustrating an operational example in the first embodiment.
FIG. 9 is a view illustrating an operational example in the first embodiment.
FIG. 10 is a view illustrating an operational example in the first embodiment.
FIG. 11 is a view illustrating an operational example in the first embodiment.
FIG. 12 is a view illustrating an operational example in the first embodiment.
FIG. 13 is a view illustrating a configuration example of a computer in a second embodiment.
FIG. 14 is a view illustrating an example of a generation information table in the second embodiment.
FIG. 15 is a view illustrating an operational example in the second embodiment.
FIG. 16 is a view illustrating an operational example in the second embodiment.
FIG. 17 is a view illustrating a configuration example of a computer in a third embodiment.
FIG. 18 is a view illustrating an example of a user defined hierarchy tree table in the third embodiment.
FIG. 19(a) is a view illustrating an example of a user defined hierarchy tree and a generalization hierarchy tree based on the user defined hierarchy tree in the third embodiment.
FIG. 19(b) is a view illustrating an example of a user defined hierarchy tree and a generalization hierarchy tree based on the user defined hierarchy tree in the third embodiment.
FIG. 19(c) is a view illustrating an example of a user defined hierarchy tree and a generalization hierarchy tree based on the user defined hierarchy tree in the third embodiment.
FIG. 20 is a view illustrating an operational example in the third embodiment.
FIG. 21 is a view illustrating an operational example in the third embodiment.
FIG. 22 is a view illustrating an operational example in the third embodiment.
FIG. 23 is a view illustrating an operational example in the third embodiment.
FIG. 24(a) is a view illustrating an operational example in the third embodiment.
FIG. 24(b) is a view illustrating an operational example in the third embodiment.
FIG. 24(c) is a view illustrating an operational example in the third embodiment.
FIG. 25 is a view illustrating an operational example in the third embodiment.

### Detailed description of the preferred embodiment

Hereinafter, the best modes for carrying out the present invention will be described in detail with reference to the drawings.

Three embodiments which will be described below are technologies that mainly protect electronic format of personal information. The term "personal information" used in the embodiments means information about an individual which may identify a specific individual by name, date of birth, or other information. Further, information which may be easily cross-checked with other information to identify the specific individual may be included in the personal information. In this embodiment, the term "anonymization of the personal information" refers to processing that converts the personal information so that a subject of the information cannot be easily identified. Further, the term "recoding" means replacing an attribute value that describes an arbitrary attribute of an individual with a more ambiguous concept.

### <First Embodiment>

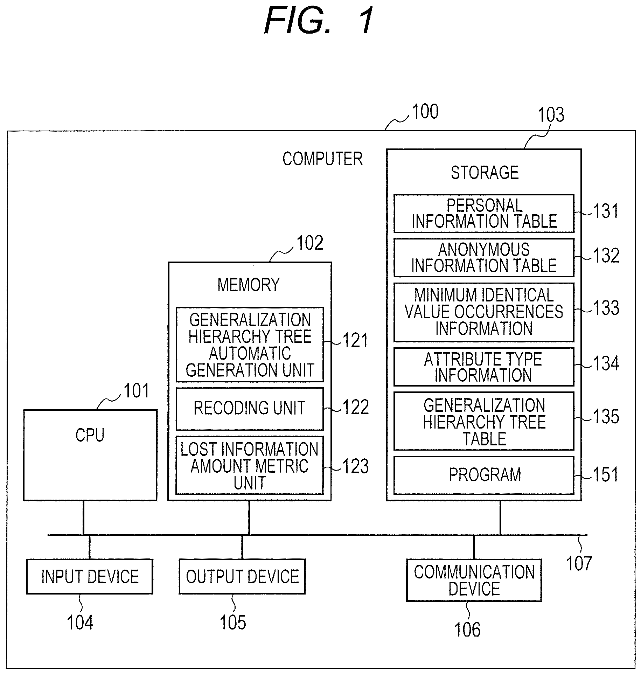

A configuration example of a device that implements a technology of a first embodiment will be described with reference to FIG. 1.

FIG. 1 is an example that configures devices on a computer. In FIG. 1, the computer 100 is an arbitrary information processing device such as a PC (personal computer), a server, or a workstation. The computer 100 includes a CPU (central processing unit) 101, a memory 102, a storage 103, an input device 104, an output device 105, and a communication device 106, which are connected to each other via an internal communication line 107 such as a bus.

The storage 103 is, for example, a storage media such as a CD-R (compact disc recordable), a DVD-RAM (digital versatile disk random access memory), or a silicon disk, a driving device of the storage media, or an HDD (hard disk drive). The storage 103 stores a personal information table 131, an anonymous information table 132, a minimum identical value occurrence information 133, an attribute type information 134, and a program 151. The personal information table 131 stores personal information regarding a plurality of individuals. In this embodiment, personal information for each individual is formed of item values for a plurality of items. The anonymous information table 132 stores a result that anonymizes the personal information table 132 according to the embodiment of the present invention. The minimum identical value occurrence information 133 stores a threshold value. The attribute type information 134 stores information types of attributes of the personal information table 131. The program 151 implements the functions which will be described below.

The input device 104 is, for example, a keyboard, a mouse, a scanner, or a microphone. The output device 105 is a display, a printer, or a speaker. The communication device 106 is, for example, a LAN (local area network) board and is connected to a communication network (not illustrated).

The CPU 101 loads the program 151 in the memory 102 and executes the program to implement a generalization hierarchy tree automatic generation unit 121 and a recoding unit 122. If necessary, the recoding unit 122 implements a lost information amount metric unit 123 as internal processing.

The generalization hierarchy tree automatic generation unit 121 has the personal information table 131 and the attribute type information 134 as an input to obtain a frequency of all attribute values from the attributes of the personal information table 131 and create a Huffman coding tree or a Shannon-Fano coding tree or Hu-Tucker coding tree from the obtained frequency information and type information of the attribute obtained from the attribute type information 134. The generalization hierarchy tree automatic generation unit 121 stores the created trees in a generalization hierarchy tree table 135 as a generalization hierarchy tree.

The recoding unit 122 has the personal information table 131, the minimum identical value occurrence information 133, and the generalization hierarchy tree table 135 as inputs to recode the attribute value in accordance with the generalization hierarchy tree corresponding to each attribute obtained from the generalization hierarchy tree table 135 so that the number of all records which are present in the table becomes larger than a value that is stored in the minimum identical value occurrence information 133. The recoding unit 122 outputs the result to the anonymous information table 132. Further, the result may be output to the output device 105.

The lost information amount metric unit 123 is a part that quantitatively estimates an amount of information of data lost by recoding the attribute value and is called from the recoding unit 122, if necessary.

Next, a specific example of the above-mentioned tables will be described.

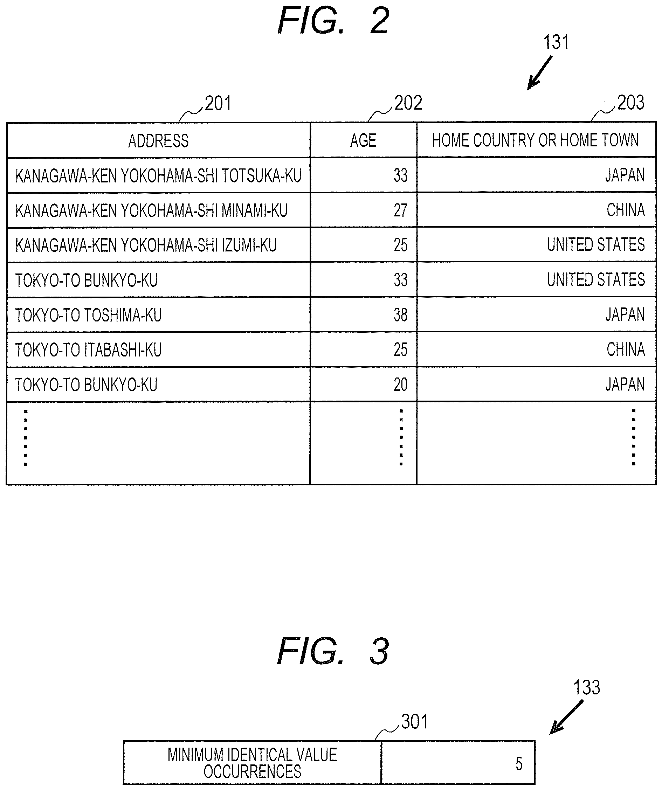

First, referring to FIG. 2, an example of the personal information table 131 will be described.

In FIG. 2, the personal information table 131 has a plurality of records. One record indicates information regarding one individual. Each record is represented by tuples of attribute values of attributes 201, 202, and 203.

A first row of the table illustrated in FIG. 2 indicates names of attributes. The attributes 201, 202, and 203 indicate any one or more of an address, an age, and home country or home town of an individual.

Information in the above-mentioned personal information table 131 is considered to be stored in advance.

Further, an item of personal information is not limited to the items illustrated in FIG. 2, but may be arbitrarily set. Further, the total number of individuals (total number of records) or the number of attributes may be arbitrarily set. The computer 100 of the first embodiment anonymizes information which is capable of specifying an individual. The information which is capable of specifying an individual is not necessarily limited to information that directly specifies an individual such as a name. For example, in some cases, an individual may be specified by combining a sex, an age, and an address. In this embodiment, a system provider determines attributes to be anonymized in advance. In the example of FIG. 2, the system provider judges that the combination of the address, the age, and the home country or home town leads specifying an individual and anonymizes the three attributes. In other words, entire attributes of the personal information do not need to be limited to the address, the age, and the home country or home town.

Next, referring to FIG. 3, an example of the minimum identical value occurrence information 133 will be described.

In the example of FIG. 3, there are five minimum identical value occurrences. The minimum identical value occurrences 301 are values by which it is considered that if the number of records having identical attribute value tuples is larger than the minimum identical value occurrences 301, even though the data is open, the individual cannot be specified. The example of FIG. 3 shows that it is considered that if five or more arbitrary attribute value tuples occur in data, it is safe even though the data is open.

Further, the value of the minimum identical value occurrences 301 is not limited to five, but may be arbitrarily set.

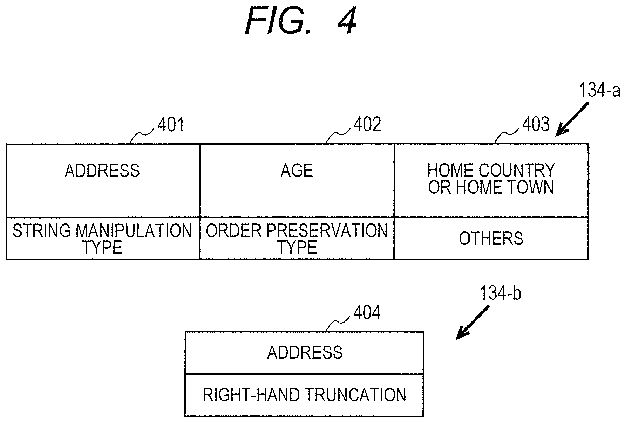

Next, referring to FIG. 4, an example of attribute type information 134 will be described.

The attribute type information 134 defines an information type of an attribute for designating a configuring method when a generalization hierarchy tree of an attribute to be anonymized is configured. Table 134-a of the example of FIG. 4 illustrates that a generalization hierarchy tree of an attribute "address" 401 is generated as a string manipulation type, a generalization hierarchy tree of an attribute "age" 402 is generated as an order preservation type, and a generalization hierarchy tree of an attribute "home country or home town" 403 is generated as the other type. As illustrated in Table 134-b, regarding an attribute of string manipulation type, a string manipulation type is designated. In Table 134-b, the attribute "address" 404 is processed as right-hand truncation type. Further, the order preservation type means that an order of leaves of the configured generalization hierarchy tree is determined in advance and the others are neither the string manipulation type nor the order preservation type.

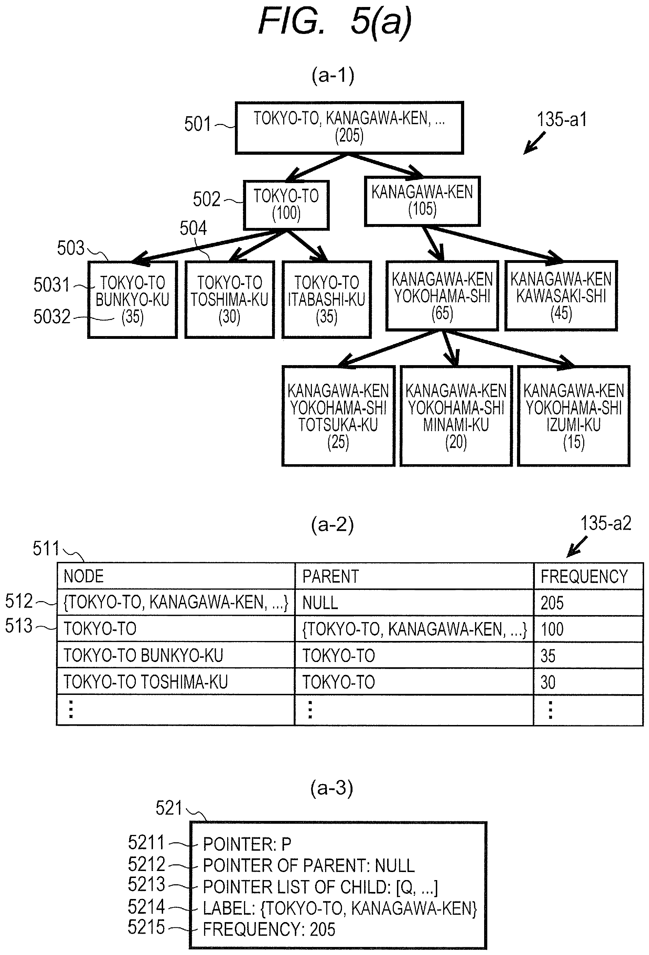

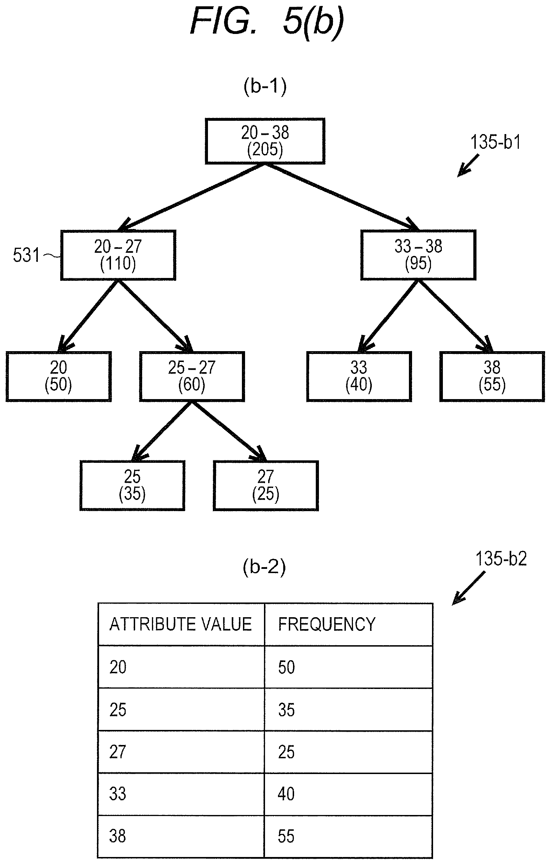

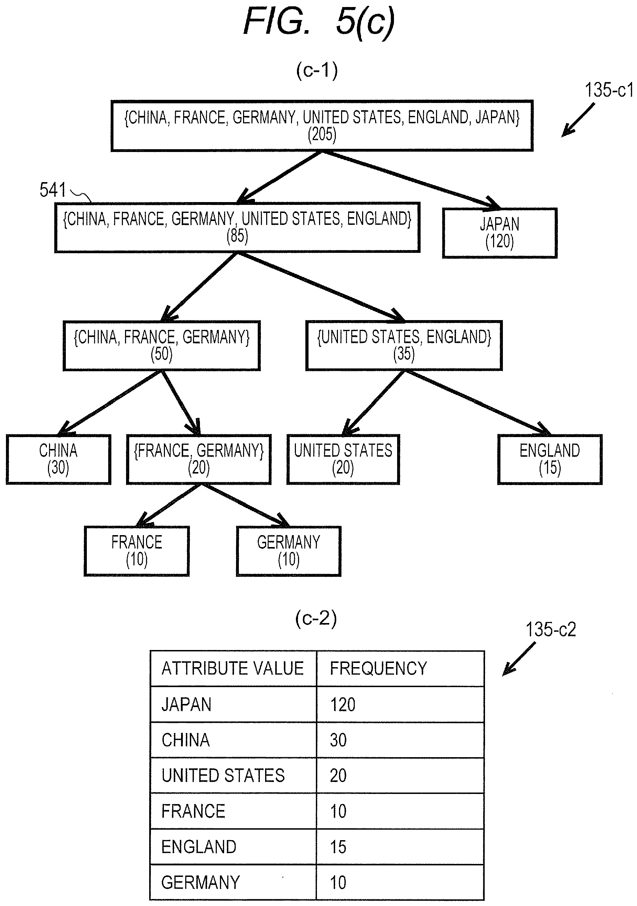

Next, referring to FIGS. 5(a), 5(b), and 5(c), an example of the generalization hierarchy tree table 135 will be described.

Here, as described above, the generalization hierarchy tree table 135 is created by the generalization hierarchy tree automatic generation unit 121 by referring to the personal information table 131 and the attribute type information 134. First, a conceptual view of the generalization hierarchy tree 135-a1 created for the attribute "address" 201 is illustrated in FIG. 5(a-1), a method of storing the generalization hierarchy tree 135-a1 in a storage is described with reference to FIG. 5(a-2), and a method of managing the generalization hierarchy tree 135-a1 in the memory is described with reference to FIG. 5(a-3).

In FIG. 5(a-1), the generalization hierarchy tree 135-a1 for the attribute "address" 201 is represented by a tree structure formed of a plurality of nodes and branches. The branch means the parent and child relationship between nodes. The branch is represented by an arrow and a node at a root of the arrow refers to a parent and a node at the arrow refers to a child. For example, in the relationship between the node 501 and the node 502, the node 501 is a parent and the node 502 is a child. A node that does not have a parent is referred to as a root and a node that does not have a child is referred to a leaf. For example, the node 501 is a root and the nodes 503 and 504 are leaves. A node that follows the parent to be reached is referred to as a grandparent and a node that follows the child to be reached is referred to as a grandchild. A node that is not a leaf is referred to as an internal node.

For example, the nodes 501 and 502 are internal nodes. In each node, a label 5031 and a frequency 5032 are associated. An original attribute value is associated to the leaf as a label and as a frequency, the number of occurrences of the attribute values in the personal table is associated. For example, the leaf 503 is labeled with "Bunkyo-ku, Tokyo" and the number of occurrences 35 is associated as a frequency. In the label of the internal node, an abstract concept that is capable of indicating all of children is allocated and total frequencies of all of the children are allocated as the frequency.

For example, an attribute "address" 201 is a string manipulation type of a right-hand truncation type if the attribute type information 134 is referred to. Therefore, the node 503 "Bunkyo-ku, Tokyo" and the node 504 "Toshima-ku, Tokyo" are generalized to a more abstract concept as the same parent node 502 and "Tokyo" is allocated as a label of the node 502. Further, as a frequency of the node 502, the total frequencies of all of the children are associated. Similarly, a result that performs the string manipulation of the right-hand truncation type on the generalization hierarchy structure of all of the attribute values and outputs the generalization hierarchy structure as a tree structure is a generalization hierarchy tree 135-a1.

In FIG. 5(a-2), an example of a method of storing the generalization hierarchy tree 135-a1 in a storage is illustrated. The generalization hierarchy tree is stored in the storage using a relational database. As a table on the relational database, an example that stores the generalization hierarchy tree 135-a1 is a table 135-a2.

A first row 511 of the table 135-a2 indicates a label of each column and each record of second and subsequent rows corresponds to one node. In other words, a left column refers to a label of the node, a center column refers to a label of a parent node of the node, and a right column refers to a frequency of the node. For example, the record 512 corresponds to the node 501. Since the node 501 is a root, the node 501 does not have a parent. In this case, in the center column, a value which is referred to as "Null" is stored and a frequency 205 of the node 501 is stored in the right column. Similarly, a record corresponding to the node 502 is a record 513.

Further, the invention is not limited to an attribute of a string manipulation type of the right-hand truncation type, but a generalization hierarchy tree for an arbitrary attribute type may be stored in the storage by this method.

In FIG. 5(a-3), a method that manages the generalization hierarchy tree 135-a1 on the memory is illustrated. A data structure 521 is an example of a data structure that manages the node 501. The data structure is configured by a pointer 5211, a pointer 5212 that indicates a parent, a pointer list 5213 of a child, a label 5214 of the node, and a frequency 5215 of the node. Since the data structure 521 that indicates the node 501 corresponds to a root, the pointer of a parent becomes NULL. Similarly, for example, since the node 503 is a leaf, a pointer list of a child of the data structure that indicates the node 503 is empty.

Further, the invention is not limited to an attribute of a string manipulation type of the right-hand truncation type, but a generalization hierarchy tree for an arbitrary attribute type may be managed on the memory by this method.

Next, referring to FIG. 5(b-1), an example that configures a generalization hierarchy tree of an attribute "age" 202 is illustrated in a tree 135-b1. Referring to the attribute type information 134, the attribute "age" 202 is an order preservation type. The order preservation type refers to an information type that stores an order of the leaves. Actually, in the generalization hierarchy tree 135-b1, all leaves are stored from the left to the right according to the size order. Further, the order is not limited to the size order, but arbitrary orders such as a lexicographic order or a manually given order may be applied. In order to construct an order preservation type generalization hierarchy tree, frequency information of an attribute value of the attribute is used.

The table 135-b2 represents a frequency of the attribute value of the attribute "age" 202 as a table which shows that the number of records having an attribute value "20" is 50, the number of records having an attribute value "25" is 35, the number of records having an attribute value "27" is 25, the number of records having an attribute value "33" is 40, and the number of records having an attribute value "38" is 55, and there is no record having other attribute values. In this example, the type of attribute values is limited to five kinds, but does not need to be limited thereto. When the order preservation type generalization hierarchy tree is constructed using the frequency table 135-b2, a generalization hierarchy tree 135-b1 is created.

Further, in the generalization hierarchy tree 135-b1, the generalization hierarchy tree is configured in a form of storing the size order so that a label of the internal node may be designated in a form of a range. For example, in the node 531, a label of "20-27" may be designated. In other words, ranges indicated by labels of two nodes which do not have a grandparent-grandchild relationship do not overlap.

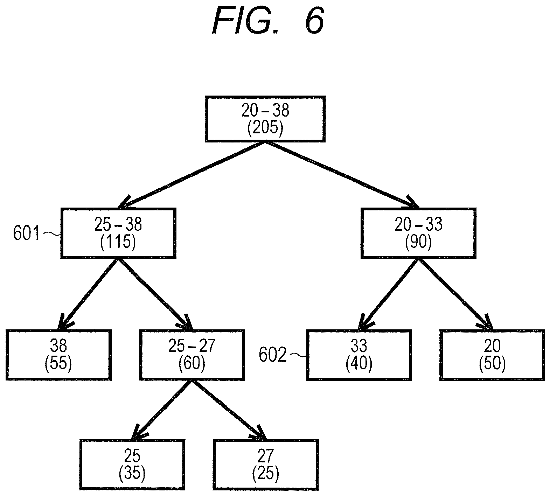

Referring to FIG. 6, a result that automatically creates a generalization hierarchy tree when an attribute type of an attribute "age" is "the others" which will be described below will be described. In this example, a label is intentionally allocated to an internal node in the form of a range. In the example of FIG. 6, labels of nodes 601 and 602 are "25-38" and "33", respectively. Even though these nodes do not have the grandparent-grandchild relationship, the nodes have a form in which "33" is included in the range of "25-38".

Next, referring to FIG. 5(c-1), an example that a generalization hierarchy tree of an attribute "home country or home town" 203 is configured will be illustrated. Referring to the attribute type information 134, the attribute type of the attribute "home country or home town" 203 is the others. In other words, the attribute "home country or home town" 203 is neither the string manipulation type nor the order preservation type. In this case, the generalization hierarchy tree is configured using only frequency information of all attribute values of attributes.

An example that configures the generalization hierarchy tree using frequency information 135-c2 is a tree 135-c1. Labels which are allocated to the internal nodes list labels of leaves which are lower-ranked than the internal node. For example, in the node 541, labels of "China, France, Germany, United States, England" are allocated, which may be interpreted as "China or France or Germany or United States or England".

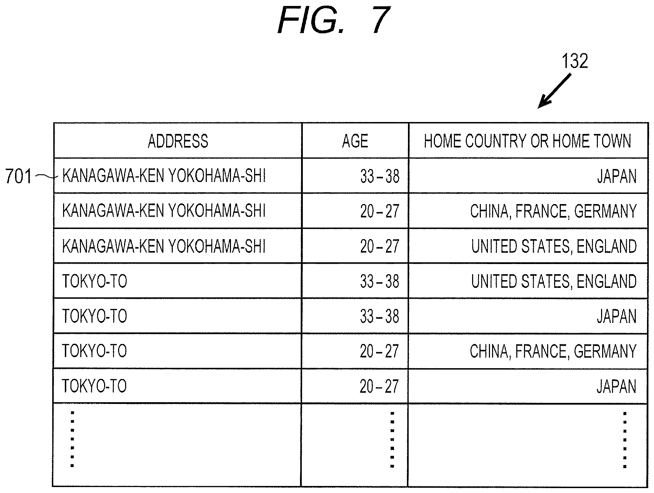

Referring to FIG. 7, an example of anonymous information table 132 will be described. The attribute values are recoded into labels of nodes of the generalization hierarchy tree corresponding to the attributes thereof. In this case, a node to be recoded is limited to a grandparent of a leaf corresponding to an original attribute value. Further, attribute value tuples for all attributes that occur in the anonymous information table 132 are required to have at least occurrences of minimum identical value occurrence information 133 in the entire anonymous information table. For example, at least five records having tuples of data tuples 701 (Yokohama-shi, Kanagawa-ken, 33-38, Japan) need to be present as indicated in the minimum identical value occurrence information 133.

Further, in the example of FIG. 7, even though labels of nodes which have grandparent-grandchild relationship are not present in the anonymous information table 132, the invention is not limited thereto. In other words, for example, a cell of an age that is recoded into "20-27" and a cell of an age that is recoded into "25-27" may co-exist.

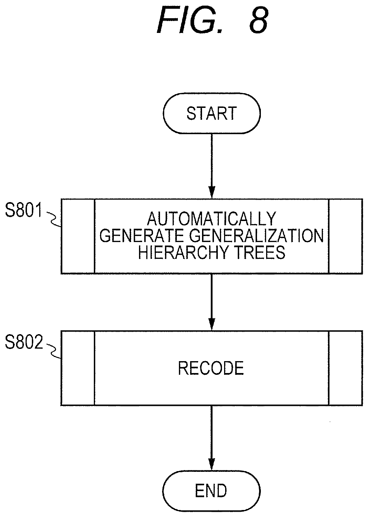

Next, referring to FIG. 8, an operational example of the computer 100 will be described.

First, the generalization hierarchy tree automatic generation unit 121 automatically generates generalization hierarchy trees referring to the personal information table 131 and the attribute type information 134 and stores the result in the generalization hierarchy tree table 135 (S801). Next, referring to the personal information table 131, the minimum identical value occurrences 301, and the generalization hierarchy tree table 135, the recoding unit 122 recodes data such that the number of arbitrary records is five or larger as illustrated in the minimum identical value occurrences 301 and stores the result in the anonymous information table 132 (S802).

Further, in FIG. 8, even though step S801 and S802 are continuously performed, as apparent from the above description, these steps may be separated. In other words, a timing when the generalization hierarchy tree automatic generation unit 121 performs the step S801 and a timing when the recoding unit 122 performs the step S802 may be different from each other. However, the step S801 needs to be performed prior to the step S802. By differently setting the timings of performing the steps S801 and S802 so as not to overlap, the following advantages may be obtained. A user of the computer 100 browses the generalization hierarchy trees automatically generated by step S801 to correct the generalization hierarchy trees. For example, if all internal nodes of the generalization hierarchy tree automatically generated by the step S801 do not need to be a candidate to be recoded, a tree in which only an internal node which will be a candidate to be recoded remains is treated as a generalization hierarchy tree again, which may speed up the step S802. Further, other generalization hierarchy trees may be corrected and a user may replace the tree with a generalization hierarchy tree having a structure unrelated to the automatically generated tree.

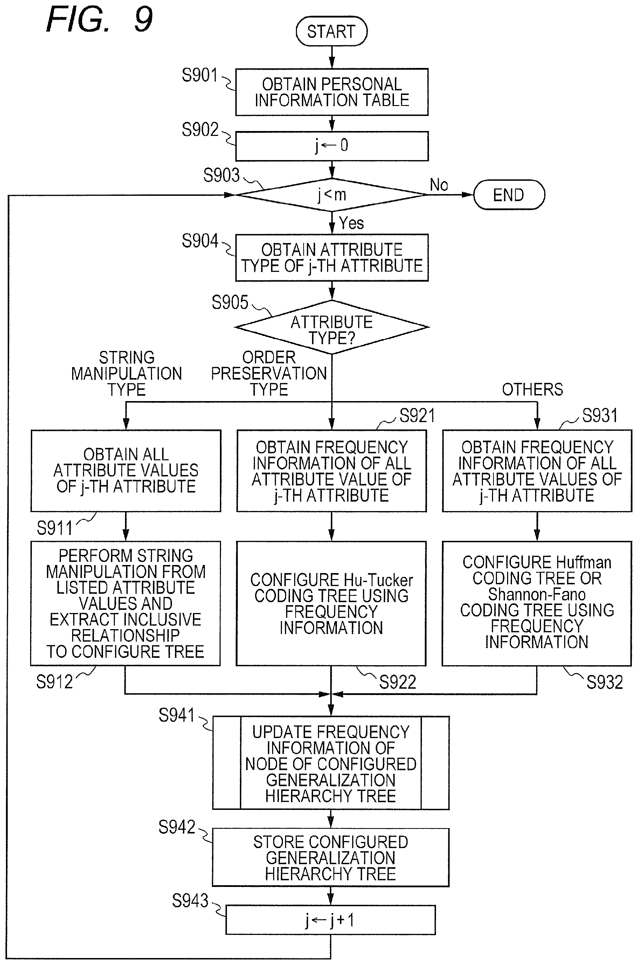

Next, referring to FIG. 9, a detailed operational example in which the generalization hierarchy tree automatic generation unit 121 automatically configures generalization hierarchy trees in the step S801 will be described. In other words, the generalization hierarchy tree automatic generation unit 121 carries out the processing of FIG. 9.

First, some notations will be defined. m refers to a total number (number of columns) of attributes of the personal information table 131. The columns of the personal information table 131 will be called as zeroth column, first column, ..., m-1-th column in order from the left.

In FIG. 9, at first, the personal information table 131 is loaded in the memory 102 (S901) and a parameter j is initialized to 0 (S902).

Next, it is checked whether j is smaller than m (S903). If j is equal to or larger than m, the processing is completed.

In the determination of the step S903, if j is smaller than m, an attribute type of a j-th attribute is obtained from the attribute type information 134 (S904) and the processing is conditionally branched in accordance with the result (S905).

If the attribute type of the attribute is the "string manipulation type" in the step S905, first, all attribute values that occur in the personal information table 131 of the j-th attribute are listed without omission (S911). Specifically, it is determined whether an attribute value corresponding to the j-th attribute is already listed while scanning all records. If the attribute value is not listed, the attribute value is listed. In order to determine whether to list an attribute value, for example, a data structure such as set which is provided by a standard library of C++ which is a programming language may be used.

Next, the string manipulation designated from the listed attribute values is performed, an inclusive relationship is extracted, and a tree is configured based on the inclusive relationship (S912). The method of extracting the inclusive relationship depends on various known string manipulation methods. For example, in the case of string manipulation of the right-hand truncation type as illustrated in the example of FIG. 5(a-1), all of the matched parts are cut out and a longer matched part is configured to be closer to a leaf and a shorter matched part is configured to be closer to a root. Two attributes values having parts matching a string become leaves of a partial tree having the matched parts as a root and the matched string is allocated to a label of a node which becomes a root of the partial tree. With respect to string manipulation type other than the right-hand truncation type, labels are appropriately allocated to all of the nodes. Further, if contents of the label are not an important matter, all of the leaves which become grandchildren of the node may be listed. For example, there are {Bunkyo-ku, Tokyo, Toshima-ku, Tokyo, Itabashiku, Tokyo}. If the processing of the step S912 is completed, the sequence proceeds to processing of a step S941 which will be described below.

If the attribute type of the attribute is "order preservation type" in the step S905, first, frequency information of all attribute values of the j-th attribute is obtained (S921). Specifically, it is determined whether an attribute value corresponding to the j-th attribute of a record which is being currently scanned is already listed while scanning all records. If it is determined that the attribute value is listed, a counter that counts a frequency of the attribute value is increased by one. If it is determined that the attribute value is not listed, a counter of a frequency of the attribute value is set to 1. As a data structure, a map which is provided from a C++ standard library is used. The map is configured by associating a value to an element in a set in the set which is described above. The element of the set is referred to as a key and the associated value is referred to as a value. At the time of completing to scan all records, frequencies of the attribute values are stored in the map.

Next, using the frequency information of the j-th attribute obtained above, the Hu-Tucker coding tree is configured, which becomes a generalization hierarchy tree of the attribute (S922). As a method of configuring the coding tree, a method disclosed in Non-Patent Literature "D. E. Knuth, "The Art of Computer Programming: Volume 3 Sorting and Searching," Addison-Wesley, pp. 439-444, 1973" may be used. Also in this case, similarly to the step S912, a label may be appropriately allocated to the node. Further, in the case of "order preservation type", as described above, as a range where the attribute values do not overlap, a label of the internal node may be allocated. After completing the processing of the step S922, the sequence proceeds to processing of the step S941 which will be described below.

If the attribute type of the attribute is "the others" in the step S905, first, all frequency information of the j-th attribute is obtained (S931), which is absolutely equal to the processing S921.

Next, using the frequency information of the j-th attribute obtained above, the Huffman coding tree or the Shannon-Fano coding tree are configured, which become generalization hierarchy trees of the attribute (S932). Which coding tree is used is determined by a designer of the computer 100 in advance. Further, as a method of configuring the Huffman coding tree, a method disclosed in Non-Patent Literature "T. S. Han and K. Kobayashi, "Mathematics of Information and Coding," American Mathematical Society, pp. 99-105, 2002" is used. As a method of configuring the Shannon-Fano coding tree, a method disclosed in Non-Patent Literature "T. S. Han and K. Kobayashi, "Mathematics of Information and Coding," American Mathematical Society, pp. 95-96, 2002" is used. After completing the processing of the step S932, the sequence proceeds to processing of the step S941 which will be described below.

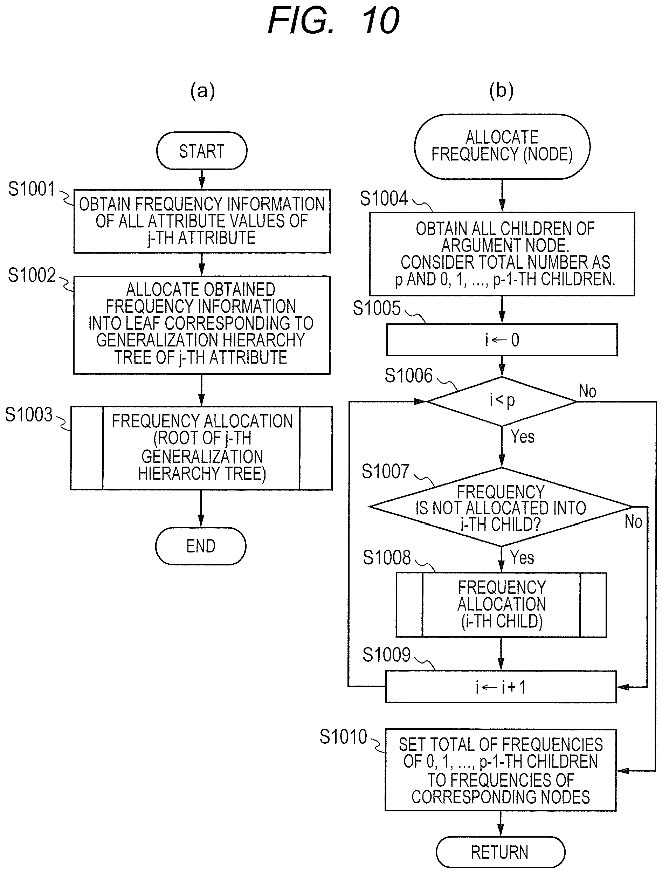

After completing the processing of the step S912, S922, or S932, the frequency information of the nodes of the generalization hierarchy tree configured in the steps is updated (S941). Further, a detailed updating method will be described below with reference to FIG. 10.

Next, the configured generalization hierarchy tree is stored in the generalization hierarchy tree table 135 (S942) and j+1 is substituted in j (S943) and then the sequence returns to the evaluation of the above-mentioned step S903.

j monotonically increases and is necessarily larger than m. Therefore, the generalization hierarchy tree for all attributes as described above may be configured.

Referring to FIG. 10, an example of a method of updating frequency information of nodes of the generalization hierarchy tree carried out in the step S941 by the generalization hierarchy tree automatic generation unit 121 will be described. In other words, the generalization hierarchy tree automatic generation unit 121 carries out processing of FIG. 10.

FIG. 10A illustrates a large flow of updating a frequency of a node of the generalization hierarchy tree and internally uses a routine of FIG. 10B recursively.

First, frequency information of all attribute values of the j-th attribute is obtained (S1001). The step S1001 is absolutely equal to the step S921.

Next, the obtained frequency information is allocated to a leaf corresponding to the generalization hierarchy tree of the j-th attribute (S1002). Specifically, a frequency obtained in the step S1001 is substituted in the frequency 5215 of the data structure of the corresponding leaf, which is carried out for all leaves.

A routine of FIG. 10B is carried out using a root of a j-th generalization hierarchy tree as an argument (S1003).

The routine of FIG. 10B will be described. The routine of FIG. 10B has the node as an argument. First, all children of the argument node are obtained and the total number is defined as p (S1004). For convenience sake, p child nodes are referred to as zero-th, first, ..., p-1-th child. Specifically, a pointer list 5213 of a child having the data structure of the node is obtained. The total number of elements which are stored in the list is p.

Next, 0 is substituted in i (step S1005).

Next, it is determined whether i is smaller than p (S1006). If i is equal to or larger than p, the sequence proceeds to a step S1010 which will be described below.

In the determination of the step S1006, if i is smaller than p, it is determined whether a frequency is already allocated into the i-th child (S1007). If the frequency is already allocated, i+1 is substituted in i (S1009), and then the sequence returns to the step S1006.

In the determination of the step S1007, if the frequency is not allocated to the i-th child yet, the routine of FIG. 10B is executed using the i-th child as an argument (S1008) and after completing the step S1008, i+1 is substituted in i (S1009) and the sequence returns to the step S1006.

In the determination of the step S1006, if i is equal to or larger than p, the total number of frequencies of zero-th, first, ..., p-1-th child is set as a frequency of the node (S1010).

By doing this, frequencies of all nodes may be set.

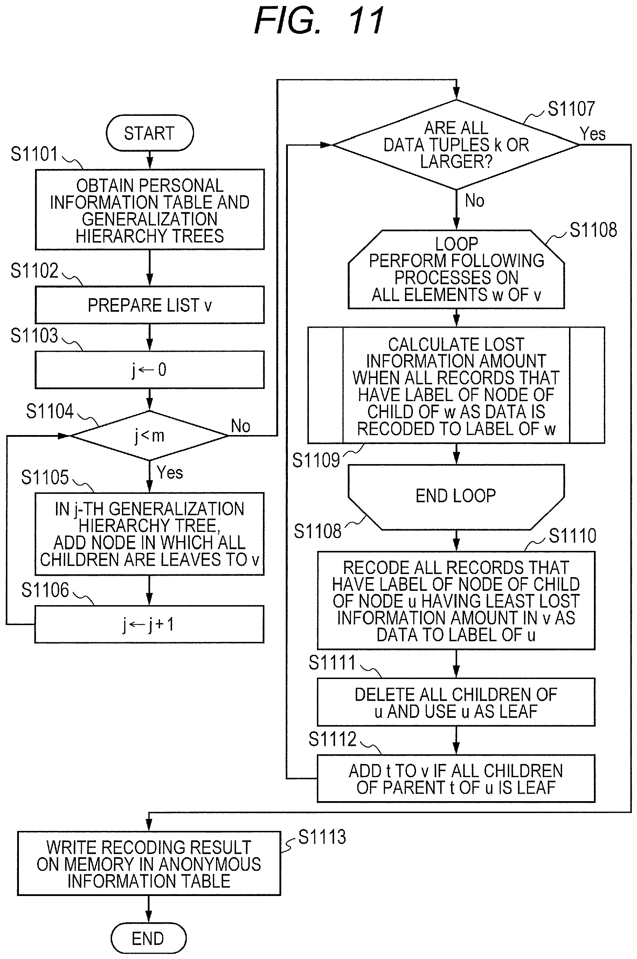

Next, referring to FIG. 11, details of processing carried out in the recoding process S802 by the recoding unit 122 will be described. In other words, the recoding unit 122 performs the processing of FIG. 11. Hereinafter, minimum identical value occurrences 301 which are defined by the minimum identical value occurrence information 133 are denoted by k.

First, the personal information table 131 and the generalization hierarchy tree table 135 are loaded on the memory (S1101). The generalization hierarchy tree table 135 is specifically managed on the memory using the above-mentioned data structure 521. Further, as described above, the automatic generation S801 of the generalization hierarchy trees and the recoding S802 are performed at different timings. Therefore, if the generalization hierarchy trees are corrected or have been corrected, the generalization hierarchy tree automatic generation unit 121 needs to update the frequency information of the generalization hierarchy trees using the method of FIG. 10 in this step.

Next, an empty list v in which the nodes are stored is prepared (S1102) and 0 is substituted in j (step S1103). In the list v prepared in step S1102, the nodes are stored and each of the stored elements e indicates a candidate in which a label of a child of e is recoded to a label of e and is dynamically changed in the processing of the step S802.

Next, it is determined whether j is smaller than m (S1104). If it is determined that j is smaller than m, in the j-th generalization hierarchy tree, all nodes in which all children are leaves are added to v (step S1105). j+1 is substituted in j (S1106) and the sequence returns to the step S1104.

In the determination of S1104, if it is determined that j is equal to or larger than m, it is determined whether the number of all attribute data tuples that occur in the personal information table on the memory is k or larger (S1107). Specifically, the data structure such as map is prepared and if all attribute data tuples indicated by a record are present in a key set of the map, a count which is stored in the value is counted up by one. If the all attribute data tuples are not present in the key set, 1 is substituted in the key as a value. The above processing is carried out for all records. It may be determined whether the number of the all values which are stored in the map is k or larger.

In the determination of the step S1107, if it is determined that the number of the data tuples is k or smaller, a loop of the step S1108 is processed. The loop is carried out on all elements w in v.

In the loop S1108, a lost information amount when an attribute value of all records having a label of a node of a child of w as data is recoded to a label of w is calculated by the lost information amount metric unit 123 (S1109). The method of calculating the lost information amount will be described below.

After completing the loop S1108, labels of all records having a label of a node of a child of node u having the least lost information amount in v as data are recoded to a label of u (S1110).

Next, all children of u are deleted and u is used as a leaf so that the generalization hierarchy tree including u is updated (S1111).

Next, if a parent of u is t and all children of t are leaves, t is added to v (S1112) and the sequence returns to the evaluation of the step S1107.

In the determination of the step S1107, if it is determined that the number of all tuples of attribute data is k or larger in the personal information table on the memory, the recoded result on the memory is written in the anonymous information table 132 (S1113), and the processing is completed.

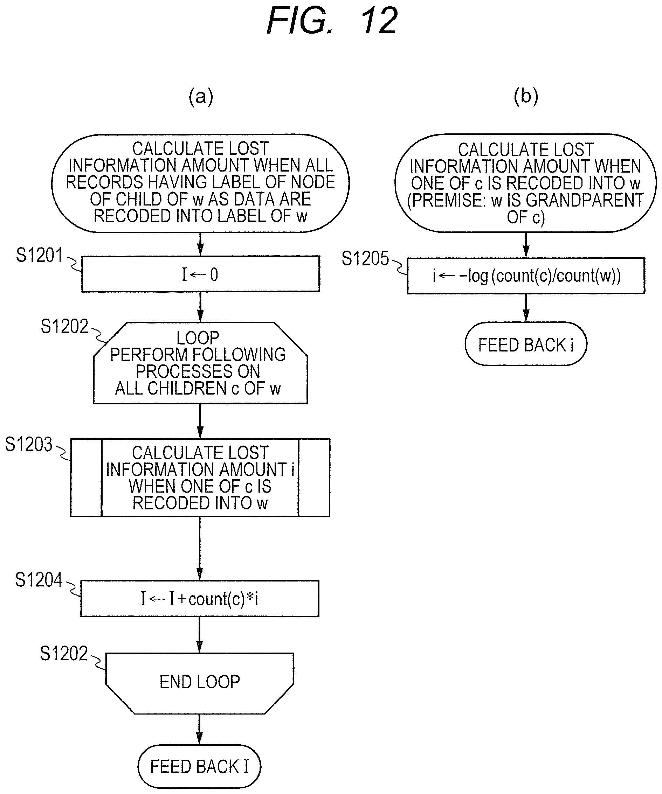

Next, referring to FIG. 12(a), details of the processing S1109 that uses the lost information amount metric unit 123 that calculates an amount of information that is lost when all records in the personal information table having the label of the node of the child of w as data are recoded to a label of w, will be described. In other words, the lost information amount metric unit 123 carries out the processing of FIG. 12(a).

First, a variable I in which a finally calculated lost information amount is stored is initialized to 0 (S1201). A loop S1202 is a loop for all children c of a node w.

In the loop S1202, internally, a lost information amount i when one record having a label of c as data is recoded into a label of w is calculated (S1203). A method of calculating a lost information amount will be described below. Next, count(c)*i is added to I (S1204). In the meantime, count (c) refers to a total number of records having a label of c as data in the personal information table on the memory and the calculation "*" refers to the multiplication of a real number. Specifically, count (c) may be obtained by referring to the frequency 5215 of the node.

After completing the loop S1202, I is fed back and the processing is completed.

Next, referring to FIG. 12(b), an detailed example of the calculating method S1203 of the lost information amount when one record having a label of c as data is recoded into a label of w will be described. The lost information amount metric unit 123 carries out the processing of FIG. 12(b). The described method does not need to be necessarily used.

The amount of information of data that is lost when one record having a label of c as data is recoded into a label of w is calculated by -log{count(c)/count(w)} (S1205). Further, even though usually, 2 is used as a base of log, but the lost information amount is not changed only by constant number times. Therefore, any number may be used. However, the number needs to be unified in the system. Similarly to the above description, count(c) refers to a total number of records having a label of c as data in the personal information table on the memory.

Further, in the calculating method of a lost information amount at the time of recoding as illustrated in FIG. 12(b), c and w do not need to have a parent and child relationship. If w is a grandparent of c, w may be defined between arbitrary nodes. Actually, if a node d is a grandparent of c and a node w is a grandparent of d, - log{count(c)/count(w)} = [-log{count(c)/count(d)}] + [-log{count(d)/count(w)}] is satisfied, which means that a lost information amount when d is recoded to be w after recoding c to be d is equal to a lost information amount when c is directly recoded into w.

As described above, a feature of the computer 100 is that a method that automatically configure the generalization hierarchy tree and a calculating method of a lost information amount are included. The Hu-Tucker coding tree, the Huffman coding tree, and the Shannon-Fano coding tree are trees in which an attribute value having a smaller frequency is disposed in a deep position and an attribute value having a larger frequency is disposed in a shallow position as described above. Therefore, at the time of recoding, in order to increase the possibility of recoding the attribute values having smaller frequencies into the same label, very available anonymous data may be generated while avoiding excessive recoding. Further, if the above-mentioned coding trees are used as the generalization hierarchy tree, the lost information amount at the time of recoding may be reduced.

### <Second Embodiment>

Next, a second embodiment will be described.

The second embodiment improves the usability of data. Hereinafter, when the second embodiment is described, configurations which overlap the first embodiment are denoted by the same reference numerals and the description thereof will be omitted. Further, most operations of the second embodiment are the same as in the first embodiment. The same operations are denoted by the same reference numerals, and the description thereof will be omitted.

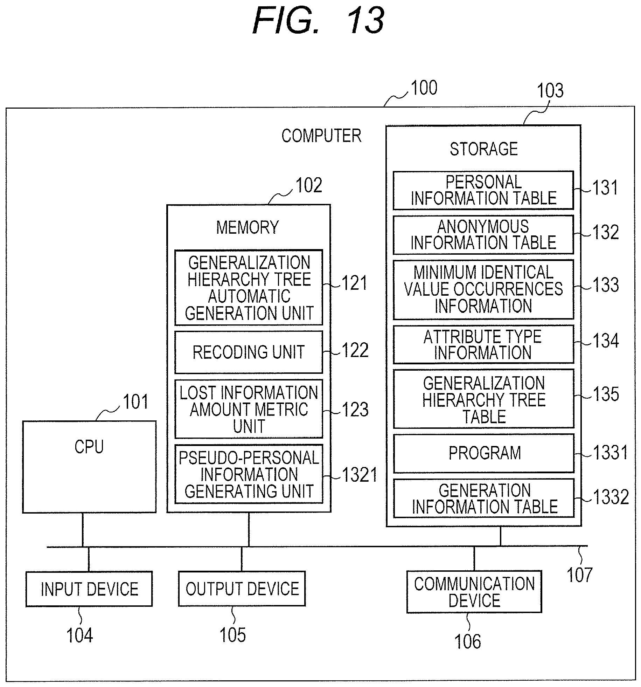

First, referring to FIG. 13, a configuration example of a computer 100 according to the second embodiment will be described.

In FIG. 13, a storage 103 of the computer 100 has a program 1331 instead of the program 151. The program 1331 is loaded on the memory and the CPU 101 implements a pseudo-personal information generation unit 1321 in addition to the units 121, 122, and 123 of the first embodiment. Further, as a storage destination of the processing result of the program 1331, a generation information table 1332 is included in the storage.

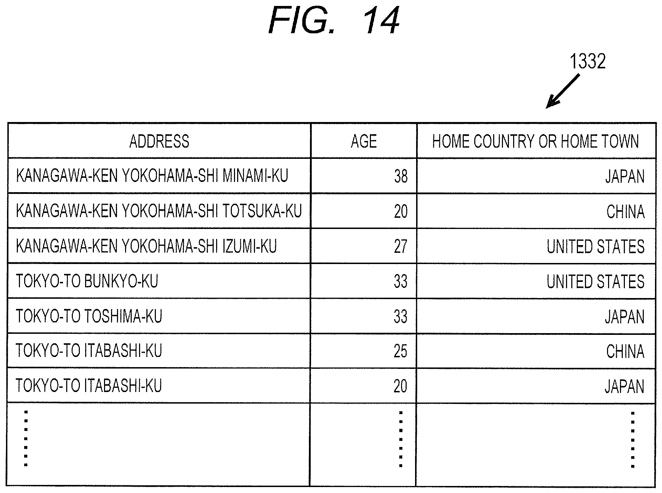

Next, referring to FIG. 14, details of the generation information table 1332 will be described.

The generation information table 1332, as illustrated in FIG. 14, is almost the same as the anonymous information table 132. The difference is that in the generation information table 1332, the attribute information has a value corresponding to the leaf of the generalization hierarchy tree of the attribute. More specifically, the attribute information is coded again as an attribute value of a leaf corresponding to a grandchild of a node of the generalization hierarchy tree corresponding to a label stored in the anonymous information table 132.

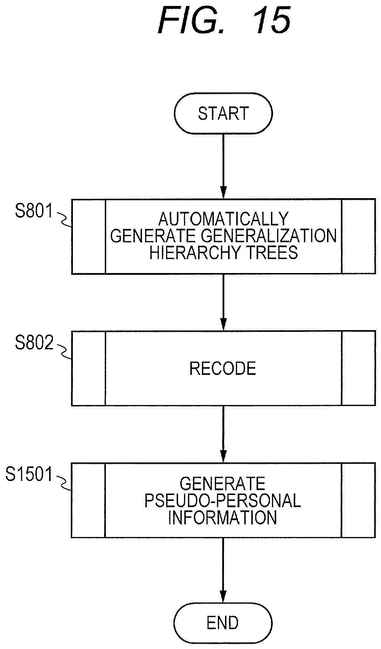

Next, referring to FIG. 15, a flow of processing of the computer 100 according to the second embodiment will be described.

In FIG. 15, the step S801 in which the generalization hierarchy tree automatic generation unit 121 automatically generates the generalization hierarchy trees and the step S802 in which the recoding unit 122 performs recoding are completely equal to those of the first embodiment. After completing the processing, the pseudo-personal information generation unit 1321 performs a pseudo-personal information generating step S1501. Further, similarly to the relationship of the steps S801 and S802 described in the first embodiment, the step S1501 does not need to be continuously performed and the processing timings may be different from each other.

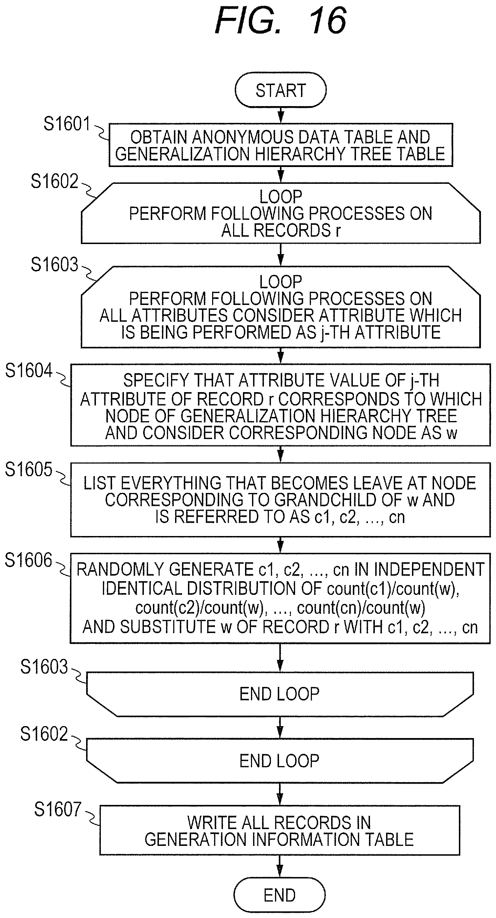

Referring to FIG. 16, a detailed example of the step S1501 in which the pseudo-personal information generation unit 1321 performs the pseudo-personal information generation processing using frequency information will be described. In other words, the pseudo-personal information generation unit 1321 carries out the processing of FIG. 16.

First, the anonymous information table 132 and the generalization hierarchy tree table 135 are obtained on the memory (S1601). After obtaining the tables, the following processing will be carried out on a loop for all records r (S1602) and a loop for all attributes of a record r as an internal loop (S1603). However, an attribute which is being currently processed is referred to as a j-th attribute.

First, it is specified to which node of the generalization hierarchy tree an attribute value of a j-th attribute of the record r corresponds and the node is considered defined as w (S1604). Next, everything that becomes leaves at a node corresponding to a child of w is listed, which is referred to as c1 c2, ..., cn (S1605). Specifically, a searching method such as width first searching from w may be used. Once the searching is performed, the searching result is associated with the node so as to be stored and then reused.

Next, even though the j-th attribute of the record r is labeled as w, which may be replaced with a label of one leaf of the generalization hierarchy tree by a method described below (S1606). Using the frequency information of the node stored in the generalization hierarchy tree, a label of c1 is selected with a probability of count(c1)/count(w) and c2 is selected with a probability of count(c2)/count(w) and c1, c2, c3, ..., cn are randomly generated with the same probability to be replaced with the label of the node of the generation result.

Finally, all records are stored in the generation information table 1332 (S1607).

The feature of the computer 100 configured in the second embodiment is that an application using data is not selected since a value of a set in which an attribute value of the generation information table 1332 is the same as the attribute value of the original personal information table 131 is obtained. For example, if there is a record indicating that the age is 10 years old, in many cases, the record may be stored in the memory as an integer. If the data is recoded to "10 - 19 years old", it is difficult to represent the record as an integer, which cannot be used in an arbitrary application. However, in the second embodiment, the record is replaced into an age between "10 - 19 years old" using the frequency information. For example, the record is replaced into "14 years old". Therefore, the record may be represented as an integer and may be used in an arbitrary application which may be used for the original personal information. Further, it is expected that the distribution of the attributes of the generation information table 1332 approaches the distribution of the original personal information table 131.

Further, in the second embodiment, even though it is described that a step of configuring the anonymous information table 132 is included, a method that configures the anonymous information table 132 in advance as described above and performs only the pseudo-personal information generation unit 1321 later is also suggested. According to the method, the personal information table 131 is not necessary so that the system may be configured only by the anonymous information table 132, the generalization hierarchy tree table 135, and the pseudo-personal information generation unit 1321. Therefore, by externally depositing only the anonymous information and generalization hierarchy tree, an available system may be constructed and the personal information does not need to be deposited so that the system has high anonymity.

### <Third Embodiment>

Next, a third embodiment will be described.

The third embodiment uses a classification of the attribute values which is desired by a user to improve the availability of data. In various fields such as international classification of diseases, a library classification, or a patent classification, a predetermined classification is present. Further, as for an age, a frequently used classification such as 10's or 20's is present. The third embodiment automatically generates a generalization hierarchy tree while considering a user-desired classification by defining only a hierarchy structure which is desired by the user as a generalization hierarchy tree in advance. For example, the age classification is defined as "20 to 24 years old" and "25 to 29 years old" in advance so as to prevent the data from being recoded such that the classification departs from the user desired classification such as "24 to 27 years old".

Further, when the generalization hierarchy tree is configured, the third embodiment accepts to add a node so as not to depart from the user defined hierarchy tree. For example, if the user defines a classification of "20 to 24 years old", as a child of the node of "20 to 24 years old", a node "20 to 22 years old" is configured, which is accepted. Further, if the user defines "*" including all attribute values as parents of "20 to 24 years old", as a parent of "20 to 24 years old", a node of "20 to 29 years old" may be newly added. By accepting to add a hierarchy which has a form so as not to depart from the user defined hierarchy tree, more detailed anonymous data may be output while using the classification desired by the user.

Hereinafter, when the third embodiment is described, configurations which overlap the first embodiment are denoted by the same reference numerals and the description thereof will be omitted. Further, some of operations of the third embodiment are the same as in the first embodiment. The same operations are denoted by the same reference numerals, and the description thereof will be omitted.

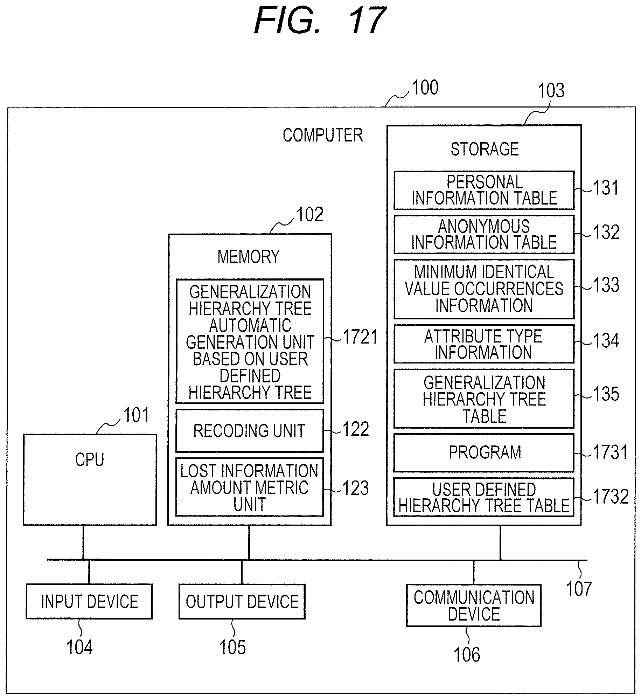

First, referring to FIG. 17, a configuration example of a computer 100 according to the third embodiment will be described.

In FIG. 17, a storage 103 of the computer 100 stores a personal information table 131, an anonymous information table 132, a minimum identical value occurrence information 133, an attribute type information 134, a generalization hierarchy tree table 135, a program 1731, and a user defined hierarchy tree table 1732.

A CPU 101 loads the program 1731 on a memory 102 and implements a generalization hierarchy tree automatic generation unit 1721 and a recoding unit 122 based on the user defined hierarchy tree. If necessary, the recoding unit 122 implements a lost information amount metric unit 123 as internal processing.

The user defined hierarchy tree table 1732 stores the definition of a classification for an arbitrary attribute which is desired by a user. The user does not need to define a user defined hierarchy tree for all attributes to be anonymized, but may define only an attribute for which the user wants to define the classification. Further, as described above, the user may define only desired classification for the attribute but does not need to define all hierarchies. Further, as for any attribute types such as "string manipulation type", "order preservation type" or "the others", in a plurality of nodes which do not have the grandparent-grandchild relationship, the classification should be defined such that the attribute value which becomes a grandchild of each node does not overlap. For example, a classification such as "25 to 38 years old" and "20 to 33 years old" or a classification such as "{Yokohama-shi, Kanagawa-ken, Kawasaki-shi, Kanagawa-ken}" and "{Yokohama-shi, Kanagawa-ken, Fujisawa-shi, Kanagawa-ken}" may be not defined.

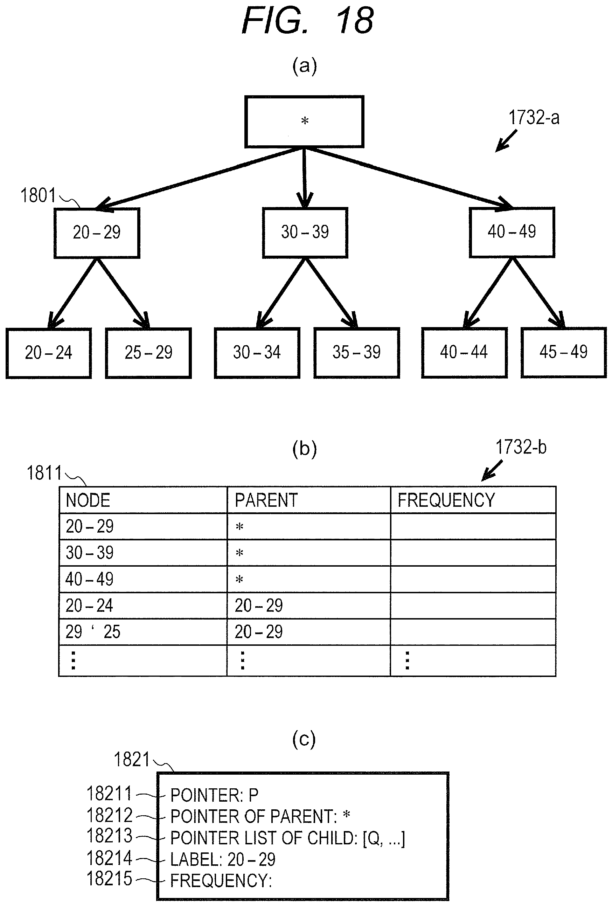

Referring to FIG. 18, an example of the user defined hierarchy tree table 1732 will be described.

First, referring to FIG. 18(a), an conceptual view of the user defined hierarchy tree for an attribute "age" will be described, referring to FIG. 18(b), a method of storing the user defined hierarchy tree in the storage will be described, and referring to FIG. 18(c), a method of managing the generalization hierarchy tree on the memory will be described.

Referring to FIG. 18(a), an example of a user defined hierarchy tree for the attribute "age" will be described. The user defined hierarchy tree is represented by a tree structure formed of a plurality of nodes and branches. Labels indicating a classification which is desired by the user are associated with the nodes.

In FIG. 18(b), an example of a method of storing the user defined hierarchy tree on the storage is illustrated. The user defined hierarchy tree is stored on the storage using a relational database. An example of storing the user defined hierarchy tree as a table on the relational database is a table 1732-b. A first row 1811 of the table indicates a label of each column and each record of second and subsequent rows corresponds to one node.

In FIG. 18(c), a method of managing the user defined hierarchy tree 1732-a on the memory is illustrated. A data structure 1821 is an example of a data structure that manages the node 1801. The data structure is configured by a pointer 18211, a pointer 18212 that indicates a parent, a pointer list 18213 of a child, a label 18214 of the node, and frequency information 18215.

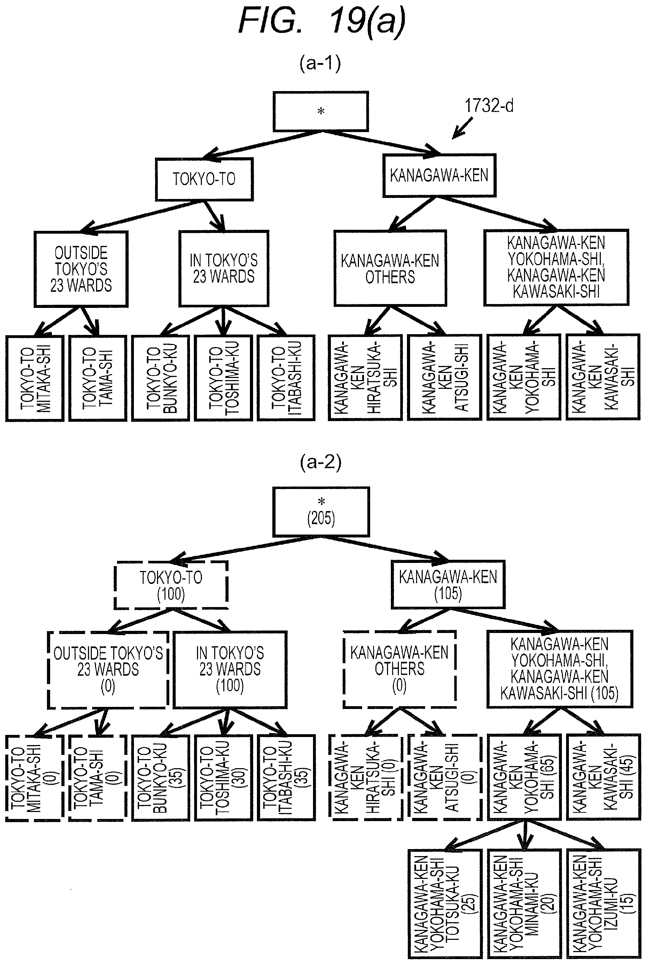

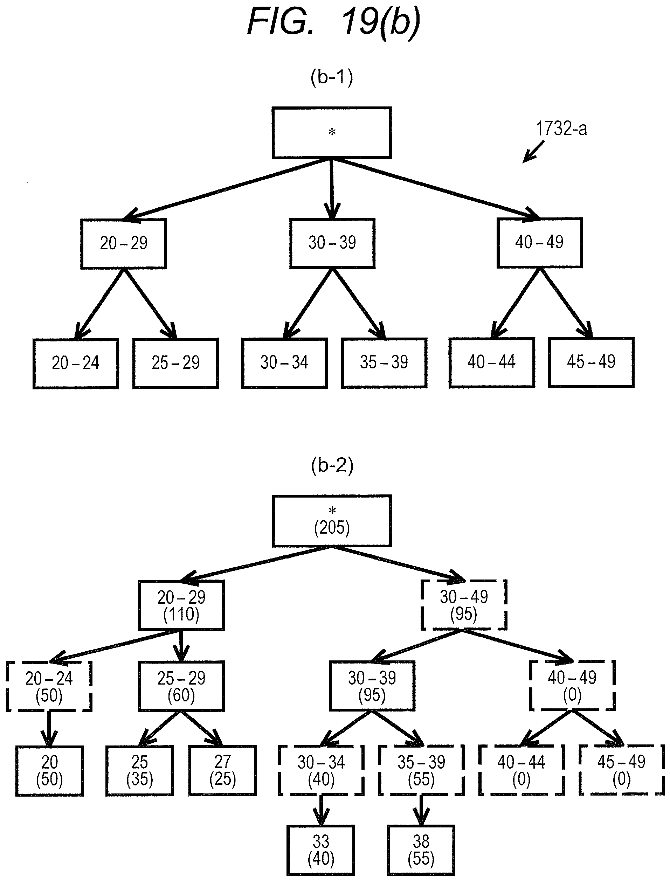

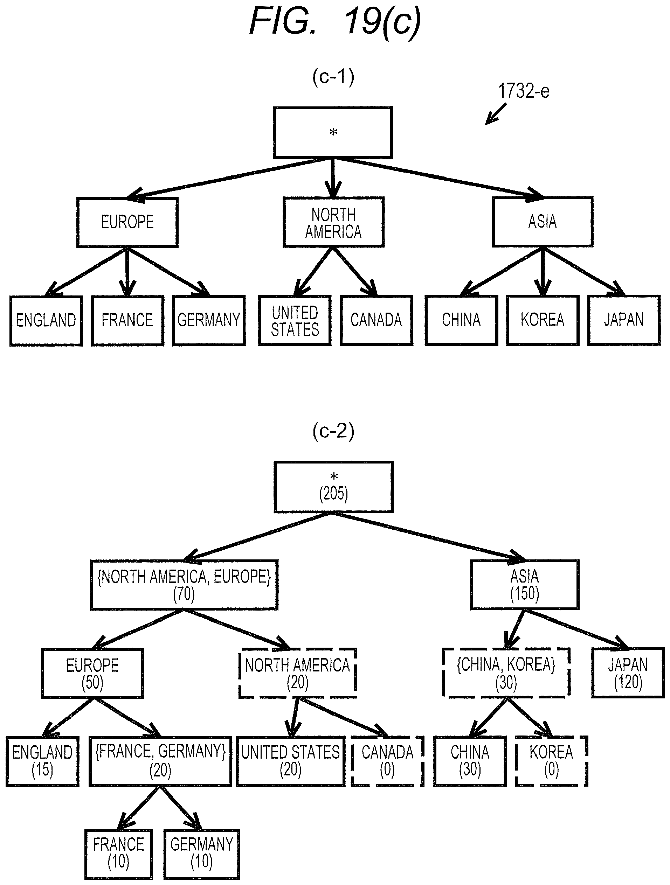

Next, referring to FIG. 19, an example of the user defined hierarchy tree in each of the attribute types and an example of a generalization hierarchy tree based on the user defined hierarchy tree will be described.

FIG. 19(a-1) is an example of the user defined hierarchy tree of an attribute "address" of the string manipulation type and FIG. 19(a-2) is an example in which the generalization hierarchy tree is configured based on the user defined hierarchy tree using data illustrated in FIG. 5(a-2). The user may define a classification other than a classification extracted from the strings as the user defined hierarchy tree having a string manipulation type attribute. For example, "Kanagawa-ken" may be classified in detail into "{Yokohama-shi, Kanagawa-ken, Kawasaki-shi, Kanagawa-ken}" and "Kanagawa-ken, the others". Here, it is apparent that the nodes of "{Yokohama-shi, Kanagawa-ken, Kawasaki-shi, Kanagawa-ken}" list the labels of the nodes which become children and have "Yokohama-shi, Kanagawa-ken" and "Kawasaki-shi, Kanagawa-ken" as children. Therefore, "Yokohama-shi, Kanagawa-ken" and "Kawasaki-shi, Kanagawa-ken" may be not defined as children. However, since it is not apparent which nodes "Kanagawa-ken, the others" has as children, the user needs to define the children of "Kanagawa-ken, the others".

FIG. 19(b-1) illustrates an example of the user defined hierarchy tree of an order preservation type attribute "age" and FIG. 19(b-2) illustrates an example that configures the generalization hierarchy tree based on the user defined hierarchy tree using data illustrated in FIG. 5(b-2). In a case of the order preservation type attribute, a label of the node indicates a range of the value so that a child for the node does not need to be defined.

FIG. 19(c-1) illustrates an example of the user defined hierarchy tree of the other attribute "nationality" and FIG. 19(c-2) illustrates an example that configures the generalization hierarchy tree based on the user defined hierarchy tree using data illustrated in FIG. 5(c-2). In the case of an attributed whose attribute type is "the others", similarly to the "string manipulation type" attribute, when the labels of the nodes list the nodes of the children, there is no need to define the children. However, if the label of the node is an abstract name such as "Europe", it is necessary to define nodes included as children.

In FIGS. 19(a-2), (b-2), and (c-2), parts enclosed by dotted line indicate nodes which are not necessary at the time of recoding. For example, in a case of a node whose frequency is 0, that is, even though the classification category is designated in the user defined hierarchy tree, if an attribute value which is divided into the nodes is not present in the personal information data, the node is not necessary for the recoding processing. Therefore, a node whose frequency is 0 may be deleted from the generalization hierarchy tree. Further, a node whose frequency is not different from the frequency of the child of the node, that is, a node that has only one child whose frequency is not 0 is also not necessary for the recoding processing. Therefore, the node having only one child whose frequency is not 0 is deleted from the generalization hierarchy tree and the child and the parent of the node may have a parent-child relationship.

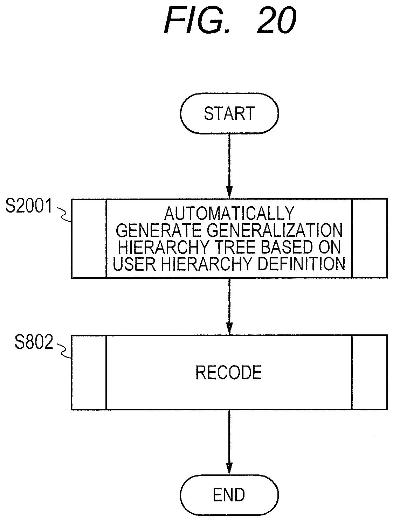

Next, referring to FIG. 20, a flow of processing of the computer 100 according to the third embodiment will be described.

First, the generalization hierarchy tree automatic generation unit 1721 based on a user defined hierarchy tree automatically generates a generalization hierarchy tree referring to the personal information table 131, the attribute type information 134, and the user defined hierarchy tree table 1732 and stores the result in the generalization hierarchy tree table 135 (S2001). Next, the recoding unit 122 recodes the data and stores the result in the anonymous information table 132 (S802). The step S802 is equal to that of the first embodiment. Similarly to the relationship of steps S801 and S802 illustrated in the first embodiment, there is no need to continuously perform the steps S2001 and S802, but the processing timings may be different from each other.

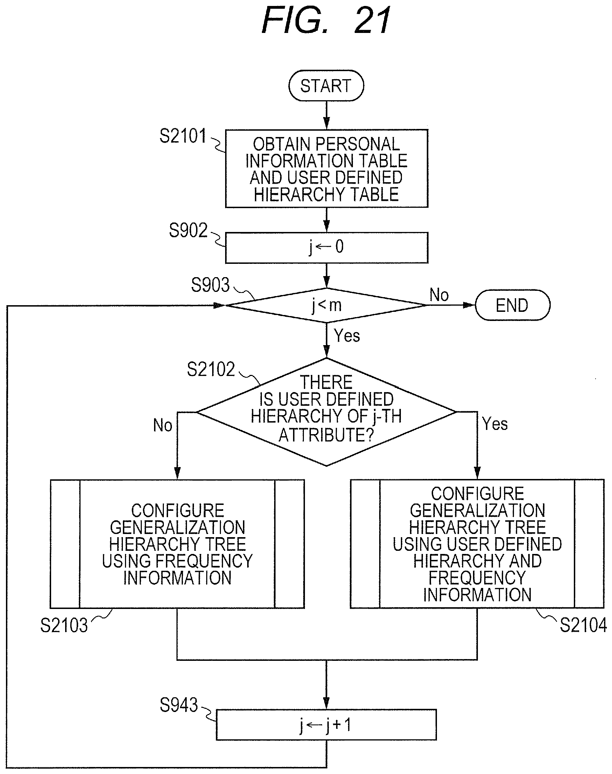

Next, referring to FIG. 21, a detailed operational example in which the generalization hierarchy tree automatic generation unit 1721 based on a user defined hierarchy tree automatically configures the generalization hierarchy tree in the step S2001 will be described. In other words, the generalization hierarchy tree automatic generation unit 1721 carries out the processing of FIG. 21 based on the user defined hierarchy tree.

First, the personal information table 131 and the user defined hierarchy tree table 1732 are loaded on the memory 102 (S2101). In this case, it is checked whether classifications defined in the user defined hierarchy trees overlap. Specifically, in a plurality of nodes that do not have a grandparent-grandchild relationship among nodes that configure the user defined hierarchy trees, it is checked whether the grandchildren of the nodes do not overlap. If the grandchildren overlap, the processing is completed.

Steps S902 and S903 are equal to those of the first embodiment.

In the step S2102, it is determined whether a user defined hierarchy tree in a j-th attribute is present. If the user defined hierarchy tree is not present, the sequence proceeds to the step S2103. If the user defined hierarchy tree is present, the sequence proceeds to the step S2104. Details of the steps S2103 and S2104 will be described below. After completing the processing of the steps S2103 and S2104, the sequence proceeds to the processing of the step S943.

The processing of the step S943 is equal to that of the first embodiment.

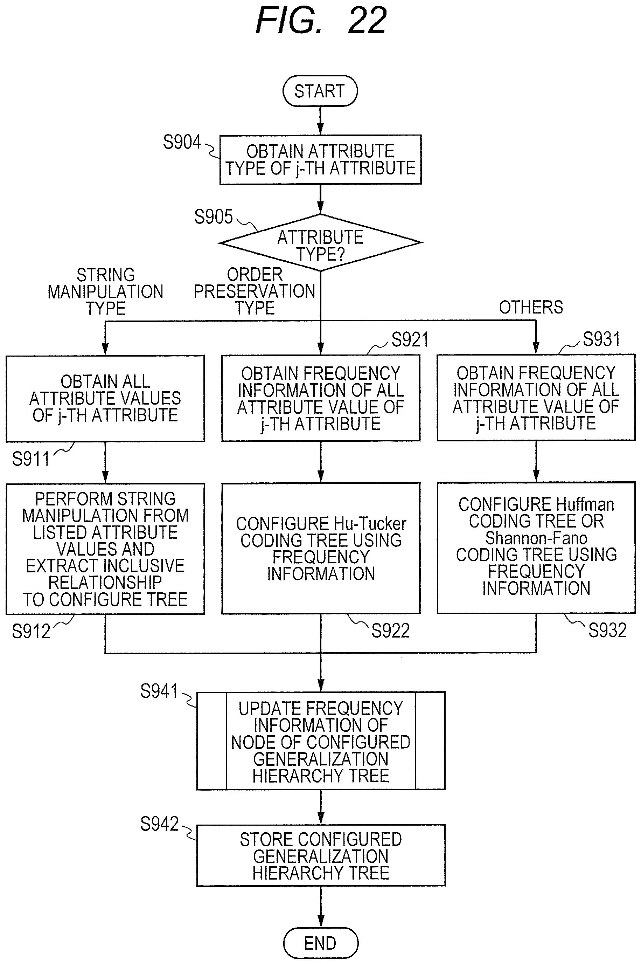

Referring to FIG. 22, the processing of the step S2103 will be described. The step S2103 is processing when the generalization hierarchy tree is configured using only information of the personal information table without using the user defined hierarchy tree. That is, all of the processing of the step S2103 is equal to the processing described in the first embodiment.

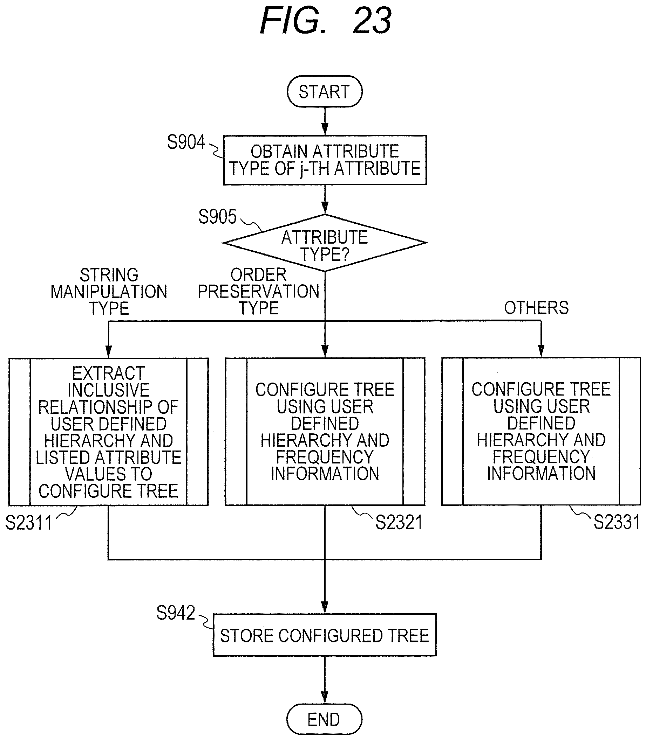

Next, referring to FIG. 23, the processing of the step S2104 will be described.

The processing of the steps S904 and S905 is the same as the above description. In the step S905, if the attribute type of the attribute is a "string manipulation type", the sequence proceeds to the step S2311, if the attribute type of the attribute is an "order preservation type", the sequence proceeds to the step S2321, and if the attribute type of the attribute is "the others", the sequence proceeds to the step S2331. The details of the steps S2311, S2321, and S2331 will be described below. After completing the processing of the step S2311, S2321, or S2331, the sequence proceeds to the step S942.

The processing of the step S942 is the same as the above description.

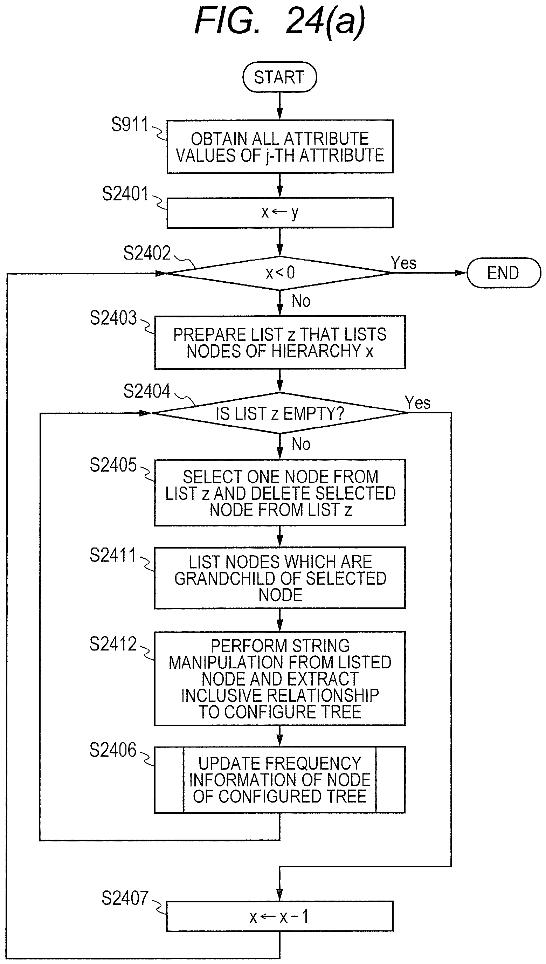

Referring to FIG. 24(a), the processing of the step S2311 will be described.

First, some notations will be defined. y refers to a hierarchy number of the deepest hierarchy of the user defined hierarchy tree 1732. "*" which includes all attribute values is a hierarchy 0 and the lower hierarchies are referred to as a hierarchy 1, a hierarchy 2, ..., a hierarchy y.

The step S911 is equal to that of the first embodiment.

In the step S2401, a parameter x is initialized to y.

Next, it is checked whether x is smaller than 0 (S2402). If x is smaller than 0, the processing is completed. In contrast, if x is equal to or larger than 0, the sequence proceeds to the step S2403.

In the step S2403, a user defined hierarchy tree having a j-th attribute is used to prepare a list z in which all nodes of the hierarchy x are listed.

In the step S2404, it is determined whether the list z is empty. If the list z is empty, the sequence proceeds to the step S2407. If the list z is not empty, the sequence proceeds to the step S2405.

In the step S2405, one node is selected from the list z and the selected node is deleted from the list z.

In the step S2411, nodes which are grandchildren of the selected node are listed in the step S2405. Specifically, if a node that does not have a child in the user defined hierarchy tree 1732 is selected in the step S2405, attribute values which are the grandchildren of the node are listed using the attribute value information obtained in the step S911. For example, a node of "Kawasaki-shi, Kanagawa-ken" is selected, attribute values including a string of "Kawasaki-shi, Kanagawa-ken" are listed. Further, if a node having a child in the user defined hierarchy tree 1732 is selected in the step S2405, nodes defined as children of the node in the user defined hierarchy tree 1732 are listed. For example, if a node of "{Yokohama-shi, Kanagawa-ken, Kawasaki-shi, Kanagawa-ken}" is selected, "Yokohama-shi, Kanagawa-ken" and "Kawasaki-shi, Kanagawa-ken" which are defined as children of "{Yokohama-shi, Kanagawa-ken, Kawasaki-shi, Kanagawa-ken}" in the user defined hierarchy tree 1732 are listed.

In the step S2412, the string manipulation which is designated from the nodes listed in the step S2411 is carried out and an inclusive relationship is extracted. A tree having the node selected in the step S2405 as a root is configured based on the inclusive relationship. The method of configuring the tree depends on various known string manipulation methods similarly to the first embodiment. The configured tree becomes a part of a generalization hierarchy tree based on the user defined hierarchy tree. The user defined hierarchy tree is updated using the configured tree.

In the step S2406, frequency information of the tree configured in the step S2412 is updated. The processing of the step S2406 will be described below. After completing the processing of the step S2406, the sequence returns to the evaluation of the above-mentioned step S2404.

In the step S2407, x-1 is substituted in x and the sequence returns to the evaluation of the above-mentioned step S2402.

As described above, when the attribute type is the "string manipulation type" attribute, the generalization hierarchy tree is configured based on the user defined hierarchy tree.

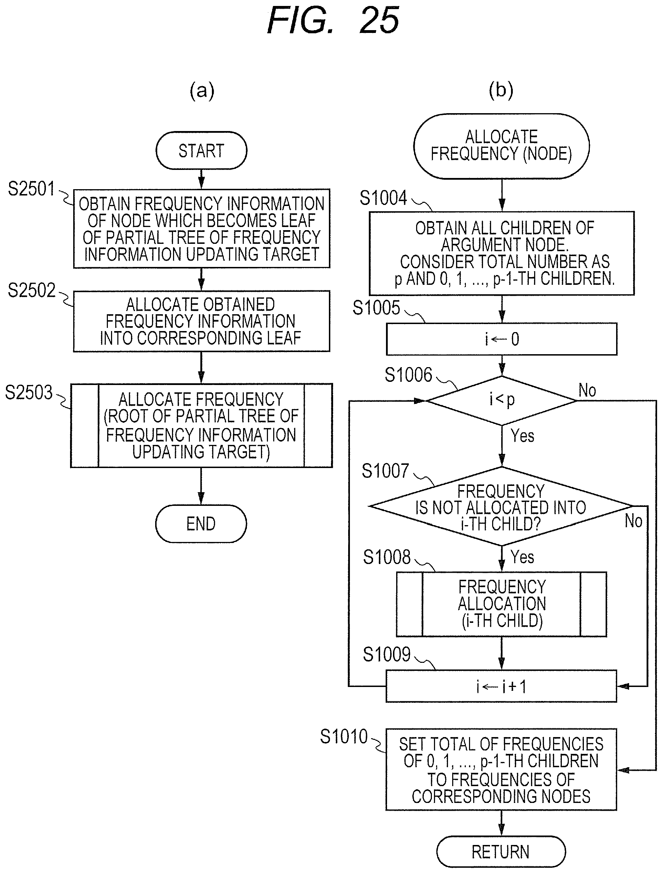

Referring to FIG. 25, processing of the step S2406 will be described. A part of the processing of the step S2406 is equal to that of the step S941 described in FIG. 10. The same operation is denoted by the same reference numerals and the description thereof will be omitted.

First, in the step S2501, frequency information of nodes which become leaves of a partial tree which is a frequency information updating target is obtained. Here, the partial tree which is the frequency information updating target indicates a tree configured in the step S2412 and nodes which become leaves of the partial tree indicate all nodes listed in the step S2411.

In the step S2502, the frequency information obtained in the step S2501 is allocated to the corresponding leaves.

In the step S2503, a routine of FIG. 25(b) is executed using a root of the partial tree which is the frequency information updating target, that is, the node selected in the step S2414 as an argument.

The routine of FIG. 25(b) is absolutely equal to that of FIG. 10B.

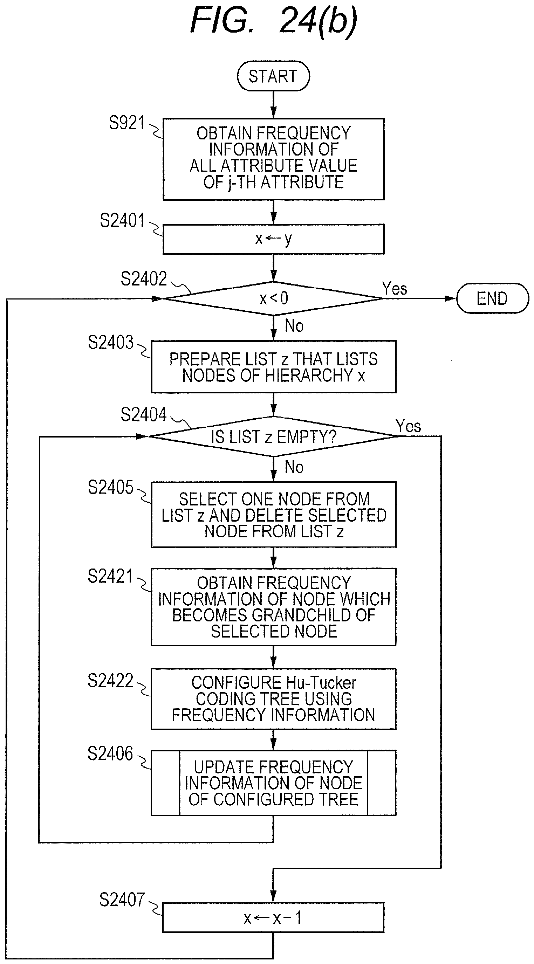

Next, referring to FIG. 24(b), processing of the step S2321 will be described. A part of the processing of the step S2321 is equal to that of the step S2311. The same operation is denoted by the same reference numerals, and the description thereof will be omitted.

The processing of the steps S921, S2401, S2402, S2403, S2404, and S2405 is the same as described above.

In the step S2421, frequency information of nodes which become grandchildren of the node selected in the step S2405 is obtained. Specifically, if a node that does not have a child in the user defined hierarchy tree 1732 is selected in the step S2405, the frequency information of the attribute value which becomes a grandchild of the node is obtained using the attribute value information obtained in the step S921. Further, if a node that has a child in the user defined hierarchy tree 1732 is selected in the step S2405, frequency information of the node which is defined as a child of the node in the user defined hierarchy tree 1732 is obtained. For example, a node of "20 to 24 years old" is selected in the user defined hierarchy tree 1732, frequency information whose attribute values are "20 years old", "21 years old", "22 years old", "23 years old", and "24 years old" is obtained.

In the step S2422, using the frequency information obtained in the step S2421, a Hu-Tucker coding tree having the node selected in the step S2405 as a root is configured. The user defined hierarchy tree is updated using the configured tree.

The processing of the S2406 and S2407 is the same as described above.

As described above, when the attribute type is the "order preservation type" attribute, the generalization hierarchy tree is configured based on the user defined hierarchy tree.

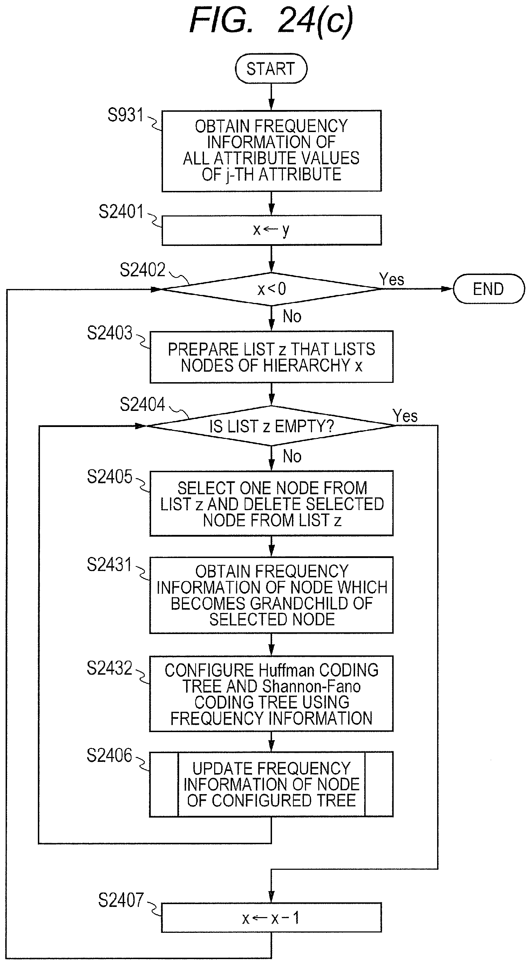

Next, referring to FIG. 24(c), processing of the step S2331 will be described. A part of the processing of the step S2331 is equal to that of the step S2311. The same operation is denoted by the same reference numerals, and the description thereof will be omitted.

The processing of the steps S931, S2401, S2402, S2403, S2404, and S2405 is the same as described above.

In the step S2431, frequency information of attribute values of nodes which become grandchildren of the node selected in the step S2405 is obtained. Specifically, if a node that does not have a child in the user defined hierarchy tree 1732 is selected in the step S2405, the frequency information of the attribute value which becomes a grandchild of the node is obtained using the attribute value information obtained in the step S931. Further, if a node that has a child in the user defined hierarchy tree 1732 is selected in the step S2405, frequency information of the node which is defined as a child of the node in the user defined hierarchy tree 1732 is obtained. For example, "Europe" is selected in the user defined hierarchy tree 1732, frequency information of "England", "France", and "Germany" is obtained.

In the step S2432, using the frequency information obtained in the step S2431, a Huffman coding tree or a Shannon-Fano coding tree is configured. Similarly to the first embodiment, which coding tree is used is determined by a designer of the computer 100 in advance. The user defined hierarchy tree is updated using the configured tree.

The processing of the S2406 and S2417 is the same as described above.

As described above, when the attribute type is the "the others" attribute, the generalization hierarchy tree is configured based on the user defined hierarchy tree.

The feature of the computer 100 configured in the third embodiment is that a part of the attribute and a part of the hierarchy having the user desired classification are defined as a user defined hierarchy tree so that a generalization hierarchy tree in which the classification desired by the user is considered is automatically generated. Further, the generalization hierarchy tree is automatically generated using frequency information data may be anonymized so as to have only a small lost information amount.

### Reference Signs List

100 Computer
101 CPU
102 Memory
121 Generalization hierarchy tree automatic generation unit
122 Recoding unit
123 Lost information amount metric unit
103 Storage
131 Personal information table
132 Anonymization information table
133 Minimum identical value occurrence information
134 Attribute type information
135 Generalization hierarchy tree table
151 Program
104 Input device
105 Output device
106 Communication device
107 Internal communication line
1321 Pseudo-personal information generation unit
1331 Program
1332 Generation information table
1721 Generalization hierarchy tree generation unit based on user defined hierarchy tree
1731 Program
1732 User defined hierarchy tree table

## Claims

1. A personal information anonymization device, comprising:
a personal information storing unit (103) configured to store one or more personal information (131) represented as a tuple of attribute values explaining each of attributes of person;
**characterized by**:
a generalization hierarchy tree automatic generation unit (121) configured to automatically configure a generalization hierarchy tree that represents a dominant concept of each attribute value which occurs in the personal information included in the personal information storing unit (131) for each attribute as a tree structure in accordance with a level of obfuscation, using a frequency obtaining unit that acquires the number of personal information having the attribute value that occurred in the selected attribute; and
a recoding unit (122) configured to recode the attribute values of the input personal information, the recoding of each attribute value using the generalization hierarchy tree generated for the attribute corresponding to that attribute value, the generalization hierarchy trees being generated using the generalization hierarchy tree automatic generation unit (121).

2. The personal information anonymization device according to claim 1,
wherein the recoding unit (122) includes a lost information amount (123) metric unit configured to calculate an amount of information lost at the time of obfuscating one attribute value of one personal information using the automatically generated generalization hierarchy tree.

3. The personal information anonymization device according to claim 2,
wherein the lost information amount metric unit (123) includes a node frequency obtaining unit that, in the case of a leaf, counts occurrence frequencies of nodes of the automatically generated generalization hierarchy tree as the number of personal information in which an attribute value indicated by the leaf occurs and in the case of an internal node, counts the occurrence frequencies of nodes of the automatically generated generalization hierarchy tree as a total frequency of nodes which are grandchildren of an external node and leaves, and
calculates a lost information amount when a node a corresponding to each attribute value of the one personal information is obfuscated to a node b which is a grandparent thereof by -log(frequency of a/frequency of b).

4. The personal information anonymization device according to claim 3, further comprising:
a unit configured to output a value obtained by replacing each of attribute values of anonymous information generated using the recoding unit (122) with an attribute value of a leaf c with a possibility of a frequency of c/a frequency of b, for each of leaves c which are grandchildren of the attribute value when the attribute value is the node a of the generalization hierarchy tree using the node frequency obtained using the node frequency obtaining unit.

5. The personal information anonymization device according to claim 1 or 2, further comprising:
a unit configured to output a value obtained by replacing each of attribute values of anonymous information generated using the recoding unit (122) with an attribute value of the leaf c with a possibility of a frequency of c/a frequency of a, for each of leaves which are grandchildren of the attribute value when the attribute value is the node a of the generalization hierarchy tree using the node frequency obtaining unit that, in the case of a leaf, counts occurrence frequencies of nodes of the generalization hierarchy tree as the number of the personal information in which an attribute value indicated by the leaf occurs and in the case of an internal node, counts the occurrence frequencies of nodes of the generalization hierarchy tree as a total frequency of nodes which are grandchildren of an external node and leaves.

6. The personal information anonymization device according to any one of claims 1 to 5,
wherein the generalization hierarchy tree automatic generation unit (121) generates a Huffman coding tree using a frequency obtained by the frequency obtaining unit.

7. The personal information anonymization device according to any one of claims 1 to 5,
wherein the generalization hierarchy tree automatic generation unit (121) generates a Shannon-Fano coding tree using a frequency obtained by the frequency obtaining unit.

8. The personal information anonymization device according to any one of claims 1 to 5, wherein the generalization hierarchy tree automatic generation unit (121) generates a Hu-Tucker coding tree using a frequency obtained by the frequency obtaining unit and order information which is defined in advance as an attribute value of the attribute.

9. The personal information anonymization device according to any one of claims 1 to 5, further comprising:
a unit configured to store the automatically configured generalization hierarchy tree.

10. The personal information anonymization device according to claims 1 to 5, and 9, further comprising:
a user defined hierarchy tree memorizing unit configured to memorize a user defined hierarchy tree in which some of nodes of a generalization hierarchy tree of an attribute are defined; and
a generalization hierarchy tree automatic generation unit based on a user defined hierarchy tree configured to automatically generate a generalization hierarchy tree using the user defined hierarchy tree and a frequency obtained by the frequency obtaining unit.

11. The personal information anonymization device according to claim 10,
wherein the generalization hierarchy tree automatic generation unit (121) based on the user defined hierarchy tree generates a Huffman coding tree using the user defined hierarchy tree and the frequency obtained by the frequency obtaining unit.

12. The personal information anonymization device according to claim 10,
wherein the generalization hierarchy tree automatic generation unit (121) based on the user defined hierarchy tree generates a Shannon-Fano coding tree using the user defined hierarchy tree and the frequency obtained by the frequency obtaining unit.

13. The personal information anonymization device according to claim 10,
wherein the generalization hierarchy tree automatic generation unit (121) based on a user defined hierarchy tree generates a Hu-Tucker coding tree using the user defined hierarchy tree, the frequency obtained by the frequency obtaining unit and order information which is defined in advance as an attribute value of the attribute.

14. The personal information anonymization device according to claim 10,
wherein the generalization hierarchy tree automatic generation unit (121) based on a user defined hierarchy tree checks whether grandchildren of nodes overlap in two or more nodes which do not have a grandparent-and-grandchild relationship among nodes that configure the user defined hierarchy tree.

15. The personal information anonymization device according to claim 10,
wherein the nodes of the user defined hierarchy tree have a label in which labels of all children of the node are listed.

16. The personal information anonymization device according to claim 10,
wherein the user defined hierarchy tree is configured by nodes, having a label of an abstract name in which a node to be a child is not obvious, and nodes, in which a node having a label of the abstract name is a parent.

17. The personal information anonymization device according to claim 10,
wherein the nodes of the user defined hierarchy tree have labels indicating a range of an attribute value which becomes a grandchild of the node and the range does not overlap a range of nodes which do not have a grandparent or grandchild relationship with the node.

## Patentansprüche

1. Anonymisierungs-Vorrichtung für persönliche Informationen, umfassend:
eine Speichereinheit (103) für persönliche Informationen, die dazu eingerichtet ist, eine oder mehrere persönliche Informationen (131) zu speichern, die als ein Tupel von Eigenschaftswerten dargestellt sind, die jeweils Eigenschaften einer Person erklären;
**gekennzeichnet durch**:
eine automatischen Erzeugungseinheit (121) für Verallgemeinerungshierarchiebäume, die dazu eingerichtet ist, automatisch einen Verallgemeinerungshierarchiebaum einzurichten, der ein dominantes Konzept jedes Eigenschaftswerts, der in den in der Speichereinheit (131) für persönliche Informationen enthaltenen persönlichen Informationen auftritt, für jede Eigenschaft als eine Baumstruktur gemäß einer Verschleierungsstufe unter Verwendung einer Häufigkeitserhaltungseinheit einzurichten, die die Anzahl von persönlichen Informationen mit dem in der ausgewählten Eigenschaft auftretenden Eigenschaftswert erfasst; und
eine Rekodierungseinheit (122), die dazu eingerichtet ist, die Eigenschaftswerte der eingegebenen persönlichen Informationen zu rekodieren, wobei das Rekodieren jedes Eigenschaftswerts den Verallgemeinerungshierarchiebaum verwendet, der für die dem Eigenschaftswert entsprechende Eigenschaft erzeugt worden ist, wobei die Verallgemeinerungshierarchiebäume unter Verwendung der automatischen Erzeugungseinheit (121) für Verallgemeinerungshierarchiebäume erzeugt werden.

2. Anonymisierungs-Vorrichtung für persönliche Informationen nach Anspruch 1,
wobei die Rekodierungseinheit (122) eine Messeinheit für verlorene Informationsmengen (123) enthält, die dazu eingerichtet ist eine Menge von zum Zeitpunkt der Verschleierung eines Eigenschaftswerts einer persönlichen Information verlorene Informationen unter Verwendung des automatisch erzeugten Verallgemeinerungshierarchiebaums zu berechnen.

3. Anonymisierungs-Vorrichtung für persönliche Informationen nach Anspruch 2, wobei die Messeinheit (123) für verlorene Informationsmengen eine Knotenhäufigkeits-Erhaltungseinheit enthält, die im Falle eines Blattes Auftrittshäufigkeitsknoten des automatisch erzeugten Verallgemeinerungshierarchiebaums als die Anzahl von persönlichen Informationen, in denen ein vom Blatt angegebener Eigenschaftswert auftritt, zählt, und im Falle eines inneren Knotens die Auftrittshäufigkeiten von Knoten des automatisch erzeugten Verallgemeinerungshierarchiebaums als eine Gesamthäufigkeit von Knoten, die Enkel eines externen Knotens und von Blättern sind, zählt, und
eine Menge verlorener Informationen, wenn ein jedem Eigenschaftswert der einen persönlichen Information entsprechender Knoten zu einem Knoten b verschleiert wird, der sein Enkel ist, durch -log (Häufigkeit von a/Häufigkeit von b) berechnet.

4. Anonymisierungs-Vorrichtung für persönliche Informationen nach Anspruch 3, ferner umfassend:
eine Einheit, die dazu eingerichtet ist, einen Wert, der durch Ersetzen jedes der Eigenschaftswerte von mittels der Rekodierungseinheit (122) erzeugten anonymen Informationen durch einen Eigenschaftswert eines Blattes c mit einer Möglichkeit einer Häufigkeit von c/einer Häufigkeit von b erhalten wird, für jedes von Blättern c, die Enkel des Eigenschaftswerts sind, unter Verwendung der mittels der Knotenhäufigkeits-Erhaltungseinheit erhaltenen Knotenhäufigkeit auszugeben, wenn der Eigenschaftswert der Knoten a des Verallgemeinerungshierarchiebaums ist.

5. Anonymisierungs-Vorrichtung für persönliche Informationen nach Anspruch 1 oder 2, ferner umfassend:
eine Einheit, die dazu eingerichtet ist, einen Wert, der durch Ersetzen jedes der Eigenschaftswerte von mittels der Rekodierungseinheit (122) erzeugten anonymen Informationen durch einen Eigenschaftswert des Blattes c mit einer Möglichkeit einer Häufigkeit von c/einer Häufigkeit von a erhalten wird, für jedes Blatt, das ein Enkel des Eigenschaftswerts ist, unter Verwendung der Knotenhäufigkeits-Erhaltungseinheit auszugeben, die im Falle eines Blattes die Auftrittshäufigkeiten von Knoten des Verallgemeinerungshierarchiebaums als die Anzahl der persönlichen Informationen, in denen ein vom Blatt angegebener Eigenschaftswert auftritt, zählt, und im Falle eines inneren Knotens die Auftrittshäufigkeiten von Knoten des Verallgemeinerungshierarchiebaums als eine Gesamthäufigkeit von Knoten, die Enkel eines externen Knotens und von Blättern sind, zählt.

6. Anonymisierungs-Vorrichtung für persönliche Informationen nach einem der Ansprüche 1 bis 5,
wobei die automatische Erzeugungseinheit (122) für Verallgemeinerungshierarchiebäume einen Huffman-Kodierungsbaum unter Verwendung einer von der Häufigkeitserhaltungseinheit erhaltenen Häufigkeit erzeugt.

7. Anonymisierungs-Vorrichtung für persönliche Informationen nach einem der Ansprüche 1 bis 5,
wobei die automatische Erzeugungseinheit (121) für Verallgemeinerungshierarchiebäume einen Shannon-Fano-Kodierungsbaum unter Verwendung einer von der Häufigkeitserhaltungseinheit erhaltenen Häufigkeit erzeugt.

8. Anonymisierungs-Vorrichtung für persönliche Informationen nach einem der Ansprüche 1 bis 5, wobei die automatische Erzeugungseinheit (121) für Verallgemeinerungshierarchiebäume einen Hu-Tucker-Kodierungsbaum unter Verwendung einer von der Häufigkeitserhaltungseinheit erhaltenen Häufigkeit und von Ordnungsinformationen, die im voraus als ein Eigenschaftswert der Eigenschaft definiert sind erzeugt.

9. Anonymisierungs-Vorrichtung für persönliche Informationen nach einem der Ansprüche 1 bis 5, ferner umfassend:
einer Einheit, die dazu eingerichtet ist, den automatisch eingerichteten Verallgemeinerungshierarchiebaum zu speichern.

10. Anonymisierungs-Vorrichtung für persönliche Informationen nach den Ansprüchen 1 bis 5 und 9, ferner umfassend:
eine Abspeicherungseinheit für benutzerdefinierte Hierarchiebäume, die dazu eingerichtet ist, einen benutzerdefinierten Hierarchiebaum abzuspeichern, in dem einige der Knoten eines Verallgemeinerungshierarchiebaums einer Eigenschaft definiert sind; und
eine automatische Erzeugungseinheit für Verallgemeinerungshierarchiebäume auf der Grundlage eines benutzerdefinierten Hierarchiebaums, die dazu eingerichtet ist einen Verallgemeinerungshierarchiebaum unter Verwendung des benutzerdefinierten Hierarchiebaums und einer von der Häufigkeitserhaltungseinheit erhaltenen Häufigkeit automatisch zu erzeugen.

11. Anonymisierungs-Vorrichtung für persönliche Informationen nach Anspruch 10,
wobei die automatische Erzeugungseinheit (121) für Verallgemeinerungshierarchiebäume auf der Grundlage des benutzerdefinierten Hierarchiebaums einen Huffman-Kodierungsbaum unter Verwendung des benutzerdefinierten Hierarchiebaums und der von der Häufigkeitserhaltungseinheit erhaltenen Häufigkeit erzeugt.

12. Anonymisierungs-Vorrichtung für persönliche Informationen nach Anspruch 10,
wobei die automatische Erzeugungseinheit (121) für Verallgemeinerungshierarchiebäume auf der Grundlage des benutzerdefinierten Hierarchiebaums einen Shannon-Fano-Kodierungsbaum unter Verwendung des benutzerdefinierten Hierarchiebaums und der von der Häufigkeitserhaltungseinheit erhaltenen Häufigkeit erzeugt.

13. Anonymisierungs-Vorrichtung für persönliche Informationen nach Anspruch 10,
wobei die automatische Erzeugungseinheit (121) für Verallgemeinerungshierarchiebäume auf der Grundlage eines benutzerdefinierten Hierarchiebaums einen Hu-Tucker-Kodierungsbaum unter Verwendung des benutzerdefinierten Hierarchiebaums, der von der Häufigkeitserhaltungseinheit erhaltenen Häufigkeit und von Ordnungsinformationen, die im voraus als ein Eigenschaftswert der Eigenschaft definiert sind, erzeugt.

14. Anonymisierungs-Vorrichtung für persönliche Informationen nach Anspruch 10,
wobei die automatische Erzeugungseinheit (121) für Verallgemeinerungshierarchiebäume auf der Grundlage eines benutzerdefinierten Hierarchiebaums überprüft, ob Enkel von Knoten in zwei oder mehreren Knoten, die keine Großvater-Enkel-Beziehung haben, unter den Knoten, die den benutzerdefinierten Hierarchiebaum bilden, überlappen.

15. Anonymisierungs-Vorrichtung für persönliche Informationen nach Anspruch 10,
wobei die Knoten des benutzerdefinierten Hierarchiebaums eine Markierung aufweisen, in der Markierungen aller Kinder der Knoten aufgelistet sind.

16. Anonymisierungs-Vorrichtung für persönliche Informationen nach Anspruch 10,
wobei der benutzerdefinierte Hierarchiebaum durch Knoten, die eine Markierung eines abstrakten Namens, bei dem es nicht offensichtlich ist, ob ein Knoten ein Kind ist, aufweisen, und Knoten, bei denen ein Knoten mit einer Markierung des abstrakten Namens ein Elternknoten ist, gebildet wird.

17. Anonymisierungs-Vorrichtung für persönliche Informationen nach Anspruch 10,
wobei die Knoten des benutzerdefinierten Hierarchiebaums Markierungen aufweisen, die einen Bereich eines Eigenschaftswerts angeben, der ein Enkel des Knotens wird, und wobei der Bereich keinen Bereich von Knoten, die keine Großvater- oder Enkel-Beziehung mit dem Knoten haben, überlappt.

## Revendications

1. Dispositif de préservation de l'anonymat d'informations personnelles, comportant :
une unité de stockage d'informations personnelles (103) configurée pour stocker une ou plusieurs informations personnelles (131) représentées sous la forme d'un tuple de valeurs d'attributs expliquant chacun des attributs d'une personne ;
**caractérisé par** :
une unité de génération automatique d'arborescence hiérarchique de généralisation (121) configurée pour configurer automatiquement une arborescence hiérarchique de généralisation qui représente un concept dominant de chaque valeur d'attribut qui apparaît dans les informations personnelles incluses dans l'unité de stockage d'informations personnelles (131) pour chaque attribut sous la forme d'une structure arborescente en fonction d'un niveau d'obscurcissement, en utilisant une unité d'obtention de fréquence qui acquiert le nombre d'informations personnelles ayant la valeur d'attribut qui est apparue dans l'attribut sélectionné, et
une unité de recodage (122) configurée pour recoder les valeurs d'attributs des informations personnelles entrées, le recodage chaque valeur d'attribut utilisant l'arborescence hiérarchique de généralisation générée pour l'attribut correspondant à cette valeur d'attribut, les arborescences hiérarchiques de généralisation étant générées en utilisant l'unité de génération automatique d'arborescence hiérarchique de généralisation (121).

2. Dispositif de préservation de l'anonymat d'informations personnelles selon la revendication 1,
dans lequel l'unité de recodage (122) inclut une unité de mesure de quantité d'informations perdues (123) configurée pour calculer une quantité d'informations perdues au moment de l'obscurcissement d'une valeur d'attribut d'une information personnelle en utilisant l'arborescence hiérarchique de généralisation générée automatiquement.

3. Dispositif de préservation de l'anonymat d'informations personnelles selon la revendication 2,
dans lequel l'unité de mesure de quantité d'informations perdues (123) inclut une unité d'obtention de fréquence de noeud qui, dans le cas d'une feuille, compte des fréquences d'occurrence de noeud de l'arborescence hiérarchique de généralisation générée automatiquement comme étant le nombre d'informations personnelles dans lesquelles une valeur d'attribut indiquée par la feuille apparait et dans le cas d'un noeud interne, compte les fréquences d'occurrence de noeud de l'arborescence hiérarchique de généralisation générée automatiquement comme étant une fréquence totale de noeuds qui sont des petits-fils d'un noeud externe et de feuilles, et
calcule une quantité d'informations perdues lorsqu'un noeud a correspondant à chaque valeur d'attribut de cette information personnelle est obscurci jusqu'à un noeud b qui est un grand-parent de celui-ci par -log(fréquence de a/fréquence de b).

4. Dispositif de préservation de l'anonymat d'informations personnelles selon la revendication 3, comportant en outre :
une unité configurée pour délivrer en sortie une valeur obtenue en remplaçant chacune des valeurs d'attributs d'informations anonymes générées en utilisant l'unité de recodage (122) par une valeur d'attribut d'une feuille c avec une possibilité d'une fréquence de c/une fréquence de b, pour chacune des feuilles c qui sont des petites-filles de la valeur d'attribut lorsque la valeur d'attribut est le noeud a de l'arborescence hiérarchique de généralisation en utilisant la fréquence de noeud obtenue en utilisant l'unité d'obtention de fréquence de noeud.

5. Dispositif de préservation de l'anonymat d'informations personnelles selon la revendication 1 ou 2, comportant en outre :
une unité configurée pour délivrer en sortie une valeur obtenue en remplaçant chacune des valeurs d'attributs d'informations anonymes générées en utilisant l'unité de recodage (122) par une valeur d'attribut de la feuille c avec une possibilité d'une fréquence de c/une fréquence de a, pour chacune des feuilles qui sont des petites-filles de la valeur d'attribut lorsque la valeur d'attribut est le noeud a de l'arborescence hiérarchique de généralisation en utilisant l'unité d'obtention de fréquence de noeud qui, dans le cas d'une feuille, compte des fréquences d'occurrence de noeuds de l'arborescence hiérarchique de généralisation comme étant le nombre des informations personnelles dans lesquelles une valeur d'attribut indiquée par la feuille apparaît et dans le cas d'un noeud interne, compte les fréquences d'occurrence de noeuds de l'arborescence hiérarchique de généralisation comme étant une fréquence totale de noeuds qui sont des petits-fils d'un noeud externe et de feuilles.

6. Dispositif de préservation de l'anonymat d'informations personnelles selon l'une quelconque des revendications 1 à 5,
dans lequel l'unité de génération automatique d'arborescence hiérarchique de généralisation (121) génère un arbre de codage de Huffman en utilisant une fréquence obtenue par l'unité d'obtention de fréquence.

7. Dispositif de préservation de l'anonymat d'informations personnelles selon l'une quelconque des revendications 1 à 5,
dans lequel l'unité de génération automatique d'arborescence hiérarchique de généralisation (121) génère un arbre de codage de Shannon-Fano en utilisant une fréquence obtenue par l'unité d'obtention de fréquence.

8. Dispositif de préservation de l'anonymat d'informations personnelles selon l'une quelconque des revendications 1 à 5, dans lequel l'unité de génération automatique d'arborescence hiérarchique de généralisation (121) génère un arbre de codage de Hu-Tucker en utilisant une fréquence obtenue par l'unité d'obtention de fréquence et des informations d'ordre qui sont définies à l'avance comme une valeur d'attribut de l'attribut.

9. Dispositif de préservation de l'anonymat d'informations personnelles selon l'une quelconque des revendications 1 à 5, comportant en outre :
une unité configurée pour stocker l'arborescence hiérarchique de généralisation configurée automatiquement.

10. Dispositif de préservation de l'anonymat d'informations personnelles selon les revendications 1 à 5, et 9, comportant en outre :
une unité de mémorisation d'arborescence hiérarchique définie par un utilisateur configurée pour mémoriser une arborescence hiérarchique définie par un utilisateur dans laquelle certains des noeuds d'une arborescence hiérarchique de généralisation d'un attribut sont définis, et
une unité de génération automatique d'arborescence hiérarchique de généralisation basée sur une arborescence hiérarchique définie par un utilisateur configurée pour générer automatiquement une arborescence hiérarchique de généralisation en utilisant l'arborescence hiérarchique définie par un utilisateur et une fréquence obtenue par l'unité d'obtention de fréquence.

11. Dispositif de préservation de l'anonymat d'informations personnelles selon la revendication 10,
dans lequel l'unité de génération automatique d'arborescence hiérarchique de généralisation (121) basée sur l'arborescence hiérarchique définie par un utilisateur génère un arbre de codage de Huffman en utilisant l'arborescence hiérarchique définie par un utilisateur et la fréquence obtenue par l'unité d'obtention de fréquence.

12. Dispositif de préservation de l'anonymat d'informations personnelles selon la revendication 10,
dans lequel l'unité de génération automatique d'arborescence hiérarchique de généralisation (121) basée sur l'arborescence hiérarchique définie par un utilisateur génère un arbre de codage de Shannon-Fano en utilisant l'arborescence hiérarchique définie par un utilisateur et la fréquence obtenue par l'unité d'obtention de fréquence.

13. Dispositif de préservation de l'anonymat d'informations personnelles selon la revendication 10,
dans lequel l'unité de génération automatique d'arborescence hiérarchique de généralisation (121) basée sur une arborescence hiérarchique définie par un utilisateur génère un arbre de codage de Hu-Tucker en utilisant l'arborescence hiérarchique définie par un utilisateur, la fréquence obtenue par l'unité d'obtention de fréquence et des informations d'ordre qui sont définies à l'avance comme une valeur d'attribut de l'attribut.

14. Dispositif de préservation de l'anonymat d'informations personnelles selon la revendication 10,
dans lequel l'unité de génération automatique d'arborescence hiérarchique de généralisation (121) basée sur une arborescence hiérarchique définie par un utilisateur vérifie si des petits-fils de noeuds se chevauchent dans deux ou plus de deux noeuds qui n'ont pas une relation de grand-parent et de petit-fils parmi des noeuds qui configurent l'arborescence hiérarchique définie par un utilisateur.

15. Dispositif de préservation de l'anonymat d'informations personnelles selon la revendication 10,
dans lequel les noeuds de l'arborescence hiérarchique définie par un utilisateur ont une étiquette dans laquelle figure la liste des étiquettes de tous les enfants du noeud.

16. Dispositif de préservation de l'anonymat d'informations personnelles selon la revendication 10,
dans lequel l'arborescence hiérarchique définie par un utilisateur est configurée par des noeuds, ayant une étiquette d'un nom abstrait dans laquelle un noeud devant être un enfant n'est pas évident, et de noeuds, dans lesquels un noeud ayant une étiquette du nom abstrait est un parent.

17. Dispositif de préservation de l'anonymat d'informations personnelles selon la revendication 10,
dans lequel les noeuds de l'arborescence hiérarchique définie par un utilisateur ont des étiquettes indiquant une plage d'une valeur d'attribut qui devient une petite-fille du noeud et la plage ne chevauche pas une plage de noeuds qui n'ont pas une relation de grand-parent ou de petit-fils avec le noeud.
